# EUROPÄISCHE PATENTSCHRIFT

(11) **EP 1 601 448 B1**
(45) Veröffentlichungstag und Bekanntmachung des Hinweises auf die Patenterteilung: **27.12.2006**
(21) Anmeldenummer: 04711998.7
(22) Anmeldetag: 18.02.2004
(51) Int. Cl.: B01D 61/06, F16K 11/07, F15B 3/00, B01D 61/10

(54) **ARMATUR FÜR ANLAGEN MIT DRUCKTAUSCHERN**
FITTING FOR INSTALLATIONS HAVING PRESSURE EXCHANGERS
ACCESSOIRE DE TUYAUTERIE POUR INSTALLATIONS EQUIPEES D'ECHANGEURS DE PRESSION

(30) Priorität: 12.03.2003 DE 10310663; 17.01.2004 DE 102004002547
(43) Veröffentlichungstag der Anmeldung: 07.12.2005
(73) Patentinhaber: KSB Aktiengesellschaft, 67227 Frankenthal (DE)
(72) Erfinder: BAUMGARTEN, Sven, 67273 Dackenheim (DE); BROSS, Stephan, 67167 Erpolzheim (DE); BRECHT, Bernhard, 67433 Neustadt/Weinstrasse (DE); BRUHNS, Uwe, 67574 Osthofen (DE); FLAK, Stefan, 67227 Frankenthal (DE); JÄGER, Christoph, 67229 Gerolsheim (DE); KOCHANOWSKI, Wolfgang, 55452 Windesheim (DE); KNÖBL, Wiltrud, 67071 Ludwigshafen (DE); ELLEGAARD, Mogens, 2670 Greve (DK)
(86) Internationale Anmeldenummer: PCT/EP2004/001532
(87) Internationale Veröffentlichungsnummer: WO 2004/080576

(56) Entgegenhaltungen:
- EP-A- 1 095 693
- GB-A- 915 827
- GB-A- 2 204 664
- US-A- 4 705 625
- US-A- 5 306 428

## Beschreibung

Die Erfindung betrifft eine Armatur, insbesondere für Anlagen mit Drucktauschern mit wechselweise durchströmten Rohrkammern, wobei innerhalb eines Gehäuses ein drehbares Steuerelement mit mehreren Strömungswegen angeordnet ist, das Gehäuse mehrere Anschlüsse für Verbindungsleitungen aufweist, das Gehäuse mit einem ersten Rohrleitungssystem und mit jeweils einer Endseite von mindestens einer Rohrkammer verbunden ist, wobei eine jeweils andere Endseite einer Rohrkammer unter Zwischenschaltung weiterer Armaturen mit einem zweiten Rohrleitungssystem verbunden ist, das Steuerelement mit einer motorbetriebenen Antriebswelle versehen ist und die Strömungswege des Steuerelementes wechselweise mit im Gehäuse angeordneten Öffnungen verbunden sind.

Solche Drucktauscher bestehen aus zwei oder mehreren Rohrkammern, deren Enden mit Armaturen versehen sind. Durch entsprechendes Öffnen und Schließen der Armaturen werden die Rohrkammern wechselweise mit Fluiden unterschiedlichen Energiegehaltes beaufschlagt. Somit ist es innerhalb der Rohrkammern möglich, innerhalb einer Anlage oder bei einem anlagentechnischen Prozess einen hohen Druck eines Fluids auf ein anderes Fluid zu übertragen, welches nur über geringen Druck verfügt. Mit Hilfe solcher Drucktauscher können daher Energiekosten innerhalb von Anlagen eingespart werden und Druckerhöhungspumpen kleiner ausgeführt werden.

Zur Aufbereitung von Wasser wird häufig das Verfahren der Umkehr-Osmose benutzt. Dabei wird ein zu reinigender Flüssigkeitsstrom mit hohem Druck durch ein Membransystem gedrückt, welches bei großen Flüssigkeitsmengen aus einer Vielzahl von Membranmodulen besteht. In solchen Membranmodulen erfolgt durch eine Membran eine Trennung in Reinwasser und in ein angereichertes Konzentrat, da immer nur ein Teil einer zu reinigenden Flüssigkeit eine Membran durchströmen kann. Der durchströmende Anteil tritt als Reinwasser oder auch Permeat auf der anderen Membranseite als nutzbarer Anteil aus. Der nicht durchströmende Teil verlässt als Brine, ein mit Salzen und Mineralien angereichertes Konzentrat der Flüssigkeit, als ein nicht nutzbarer und unter hohem Druck stehender Anteil ein Membranmodul. Dieser Druck liegt ca. 2 bar unter einem Modul-Eingangsdruck von ca. 65 bar.

Durch die US 5 306 428 ist eine Reverse-Osmose-Anlage bekannt, in der zur Energierückgewinnung Drucktauscher in Form von Rohrkammern benutzt werden. Mit deren Hilfe wird der noch hohe Druck des aus dem Membranmodul abfließenden, energiereichen Brine auf eine noch zu reinigende Flüssigkeit übertragen. Somit ist um das Maß dieser Drucksteigerung eine geringere Pumpenantriebsleistung für die einzuspeisende Flüssigkeit erforderlich, um den für das Reverse-Osmose-Verfahren notwendigen hohen Druck zu erzeugen.

Zur Steuerung und/oder Umschaltung der Fluidwege des Brine in und aus den Rohrkammern des Drucktauschers dient, neben anderen Armaturen, eine Armatur mit einem rotierenden Steuerelement. Mit dessen Hilfe erfolgt eine wechselweise Beaufschlagung der Rohrkammern des Drucktauschers mit dem aus den Membranmodulen austretenden Brine. Das rotierende Steuerelement ist als Walze ausgebildet, in der nach Art eines 3-Wege-Hahnes Verbindungskanäle angeordnet sind. Während der Umschaltvorgänge erfolgt eine vollständige Absperrung aller Strömungswege. Um Druckstöße bei solchen Umschaltvorgängen zu vermeiden, sind innerhalb der Walze Druckausgleichskanäle angeordnet.

In Abhängigkeit von der Betriebsdauer einer Membran nimmt deren Abscheidefähigkeit ab und eine zu reinigende Flüssigkeit muss entsprechend länger innerhalb eines Membranmoduls verweilen. Aus diesem Grunde werden beim Stand der Technik mit Hilfe eines Stellmotors die Umschaltzeiten der Walze beeinflusst. Diese Armatur ist jedoch nur für kleine Reverse-Osmose-Anlagen geeignet, da die Durchströmquerschnitte innerhalb der Armatur annähernd gleich groß sind wie die Durchströmquerschnitte der zu befüllenden Kanäle. Bei großen Anlagen und den darin zu verschiebenden Flüssigkeitssäulen sowie den dadurch bedingten Kräfte kommt es zu einem erheblichen Dimensionierungsproblem der Armatur.

Die EP 1 095 693 A1 offenbart eine Süßwassergewinnungsanlage durch Umkehrosmose, bei der jede Hauptkammer einen geschlossenen Kreislauf bildet, der eine kontinuierliche Zirkulation des Wassers durch sie hindurch in gleicher Richtung ermöglicht. Die Ansteuerung der Strömungswege erfolgt hier durch axial verschiebbare Steuerkolben.

Weitere Lösungen mit Steuerkolben zur Änderung von Strömungswegen in Reverse-Osmose-Anlagen zeigen die US 4 705 625 und die GB 2 204 664. Bei Letzterer ist die Oberfläche des axialverschiebbaren Steuerkolbens mit Taschen versehen, durch die hindurch eine Umsteuerung eines Strömungsweges erfolgt. Alternativ dazu kann der Steuerkolben mit diagonal verlaufenden Durchbohrungen versehen sein, über die Strömungsumlenkung stattfindet. Solche Lösungen sind gegenüber hohen Drücken schwierig abzudichten.

Der Erfindung liegt das Problem zugrunde, insbesondere für große Reverse-Osmose-Anlagen eine Umschalteinrichtung zu entwickeln, mit deren Hilfe in einfacher Weise große Flüssigkeitsströme störungsfrei zwischen verschiedenen Rohrkammern des Drucktauschers verteilt werden können. Die Lösung dieses Problems sieht bei einer gattungsgemäßen Armatur vor, dass innerhalb des Gehäuses zum Steuerelement eine Zuströmung aus axialer und/oder radialer Richtung erfolgt und vom Steuerelement eine Abströmung in axialer Richtung erfolgt. Bei axialer Zu- und Abströmung lässt sich eine minimale Baulänge der Armatur erreichen. Bei radialer Zuströmung hingegen wird die Armatur zwar etwas länger, jedoch lassen sich die auftretenden Axialschübe einfacher beherrschen.

Eine Ausgestaltung sieht vor, dass das Steuerelement als ein hohlzylinderförmiges Steuerelement ausgebildet ist und dass eine Trennwand das hohlzylinderförmige Steuerelement in zwei Räume unterschiedlicher Druckbereiche unterteilt. Damit wird innerhalb der Armatur die Bildung zusätzlicher Räume ermöglicht, in denen eine Strömungsumlenkung für ein auszutauschendes Fluid stattfindet. Somit findet für die eigentliche Steuer- und Dichtfunktion der Armatur ein einfaches, dünnwandiges Bauteil Verwendung, welches bei den Umschaltvorgängen leichter zu steuern ist. Hierzu sieht eine weitere Ausgestaltung vor, dass in den Räumen unterschiedlicher Druckbereiche zusätzliche Versteifungen angeordnet sind. Solche Versteifungen sind als Rippen oder einen zu durchströmenden Druckbereich in Strömungsrichtung unterteilende Wandelemente ausgebildet. Ebenso können die zusätzlichen Versteifungen in Form von Ringelementen ausgebildet sein. Dies können Segmente oder umlaufende Teile sein. Sie verbessern die Steifigkeit des hohlzylinderförmigen Steuerelementes, wenn es unterschiedlichen Druckverhältnissen ausgesetzt ist, wodurch Verformungen des Bauteiles entgegengewirkt wird.

Verschiedene Ausgestaltungen zur Betätigung des hohlzylinderförmigen Steuerelementes sehen vor, dass die Antriebswelle drehmomentübertragend mit der Trennwand verbunden ist, dass die Trennwand im mittleren Bereich des hohlzylinderförmigen Steuerelementes angeordnet ist, dass ein drehmomentübertragendes Bauteil an einer Stirnseite des hohlzylinderförmigen Steuerelementes angeordnet ist, dass die Trennwand mit dem Steuerelement fest verbunden ist oder dass die Trennwand fest mit dem Gehäuse verbunden ist. Somit kann eine Antriebswelle direkt oder indirekt am Steuerelement befestigt werden. Dies ist abhängig von der günstigsten Herstellungsweise. Bei der Anordnung der Trennwand im mittleren Bereich des hohlzylinderförmigen Steuerelementes ist die Unterteilung in zwei Druckräume gewährleistet. Dabei kann die Trennwand, welche das Steuerelement in zwei Druckbereiche unterteilt, direkt am Steuerelement befestigt oder mit dem Gehäuse verbunden sein.

Dazu sehen Ausgestaltungen vor, dass die Trennwand am Gehäuse mit Streben im Bereich einer hochdruckseitigen Zulauföffnung befestigt ist. Dabei können Dichtungselemente zwischen der dann stillstehenden Trennwand und der drehenden Innenwandfläche des hohlzylinderförmigen Steuerelementes angeordnet sein. Auch kann die Trennwand und/oder die Trennwand mit dem Gehäuse verbindende Streben als ein auswechselbarer Einsatz ausgebildet sein. Dies erleichtert Montage- und Wartungsarbeiten und die am Gehäuse befestigte Trennwand ermöglicht eine axialschubfreie Anordnung des Steuerelementes.

Nach einer anderen Ausgestaltung ist das Steuerelement als ein Vollzylinder ausgebildet und in dessen Umfangsfläche bilden mehrere nutförmig gestaltete Strömungswege unterschiedliche Druckbereiche. Diese andere Herstellungsart verbessert die Festigkeitseigenschaften. Dazu sehen weitere Ausgestaltungen vor, dass auf der Umfangsfläche die Strömungswege gleicher Druckbereiche einander diametral gegenüberliegend angeordnet sind, wodurch ein Druckgleichgewicht geschaffen wird.

Weiterhin ist vorgesehen, dass ein mit einer Strömungsöffnung verbundener Abschnitt der nutförmigen Strömungswege die Steueröffnung des Steuerelementes bildet, und dass im Bereich einer radialen hochdruckseitigen Zulauföffnung eine umlaufende Ringnut im Gehäuse und/oder in der Umfangsfläche des Steuerelementes angeordnet ist. Dadurch ergeben sich bessere zusätzliche radiale Anschlussmöglichkeiten. Weiter ist am Steuerelement eine geschlossene ringförmige Dichtungszone zwischen Enden der nutförmigen Strömungswege der unterschiedlichen Druckbereiche angeordnet und im Bereich der Dichtungszone sind am Steuerelement und/oder am Gehäuse Dichtungselemente angeordnet. Und über einen im Steuerelement angeordneten Druckentlastungskanal erfolgt zwischen dessen Stirnseiten eine Axialschubentlastung. Somit sind zusätzliche Axiallager entbehrlich.

Die Druckbelastung des Gehäuses wird optimiert durch am Außenumfang des Steuerelementes gabelförmig und/oder gestuft ausgebildete und mit den Steueröffnungen verbundene Steuertaschen. Damit erfolgt im Bereich der Steuertaschen eine gezielte Innendruckbelastung des Gehäuses mit hohem Druck, um äußeren Gehäusebelastungen entgegen zu wirken. Zusätzlich ergibt sich durch die Steuertaschen ein weiterer Strömungsweg, mit dessen Hilfe eine kurzzeitige Verbindung zwischen den angeschlossenen Rohrkammern ermöglicht wird. Somit wird nur kurzzeitig ein Abschnitt der Überströmkanäle in das Steuerelement verlagert.

Bei einer gabelförmigen Ausbildung der Steuertaschen werden während des Umschaltens annähernd kontinuierliche Volumenströme und Druckverhältnisse innerhalb der Armatur beibehalten. In der eigentlichen Gabel befindliche Stegelemente sind in der Ebene der radialen Versteifungsrippen angeordnet. Diese Maßnahme verbessert ebenfalls die Kräfteübertragung innerhalb der Armatur. Analog können am Innenumfang der Gehäuseinnenwand gabelförmig und/oder gestuft ausgebildete und mit Strömungsöffnungen verbundene Strömungstaschen angeordnet sein.

Nach einer anderen Ausgestaltung der Erfindung sind an und/oder in der Außenwand des Gehäuses mehrere, die Strömungsöffnungen verbindende Überströmkanäle angeordnet. Mit deren Hilfe erfolgt während der Arbeitstakte des Drucktauschers ein Austausch der Flüssigkeit aus und in die Rohrkammern, wobei die Armatur gewährleistet, dass jede angeschlossene Rohrkammer immer aus dem Bereich des zuströmenden Fluids befüllt wird und in den Bereich des abströmenden Fluids entleert wird. Für eine Anpassung der Steuerzeiten des Drucktauschers ist vorgesehen, dass die im Gehäuse angeordneten Strömungsöffnungen Bestandteil einer einstellbaren, hohlzylinderförmigen Gehäuseinnenwand sind. Eine solche zusätzliche hohlzylinderförmige Gehäuseinnenwand ist als separates Bauteil gestaltet und kann mit den darin angeordneten Strömungsöffnungen relativ zum Gehäuse verdreht angeordnet werden. Somit kann ein Überschneidungszeitpunkt mit den am Steuerelement angeordneten Steueröffnungen im Bedarfsfall angepasst werden. Je nach konstruktiver Ausbildung kann dies während eines Betriebes oder beim Einbau der Armatur in eine Anlage stattfinden.

Weiterhin sind in der Außenwand des Gehäuses mehrere Zugangsöffnungen angeordnet. Bei einem gegossenen Gehäuse erleichtern sie die Herstellung und Bearbeitung. Sie werden durch bekannte Mittel in Form von Verschlusselementen, wie Stopfen, Schraubelementen und ähnlichen Bauteilen verschlossen. Zur Steigerung der Gehäusesteifigkeit sind in der Außenwand des Gehäuses mehrere äußere Versteifungselemente angeordnet. Diese können umlaufend oder nur äußeren Gehäusetaschen angeordnet sein. Die Gehäusetaschen sind zwischen den Überströmkanälen aus Gewichts- und Herstellungsgründen angeordnet.

Weiterhin können die Rohrkammern des Drucktauschers während einer Bewegung des Steuerelementes kurzzeitig durch die Überströmkanäle untereinander verbunden sein. Wenn sich vorzugsweise auf der Hochdruckseite die Steueröffnungen über einen anderen Winkelbereich als die zugehörigen Strömungsöffnungen erstrecken, ergibt sich eine Umschaltung mit minimalen Druckstößen. Der Winkel zwischen den Öffnungen ist so bemessen, dass wenn die Öffnung für die Rohrkammer 1 gerade schließt und den Durchfluss des Hochdruckstromes beendet, die Öffnung für Rohrkammer 2 gerade öffnet und damit den Hochdruckstrom übernimmt. Dadurch ist gewährleistet, dass ein noch zu reinigendes und auf der anderen Seite der Rohrkammern befindliches Fluid immer unter hohem Druck steht.

Auch können die Überströmkanäle als äußere Rohrelemente ausgebildet sein, wobei für eine leichtere Montage mehrere Anschlüsse für die Rohrelemente über den Außenumfang des Gehäuses verteilt angeordnet sind. Nach einer anderen Ausführungsform sind die Überströmkanäle als in die Gehäusewand integrierte Strömungskanäle ausgebildet. Dies reduziert die Anzahl der Dichtstellen.

Eine andere Ausgestaltung sieht vor, dass über jeweils mindestens zwei einander diametral gegenüberliegenden Strömungsöffnungen und damit korrespondierenden Steueröffnungen ein Flüssigkeitsaustausch zwischen Steuerelement und den Überströmkanälen erfolgt. Eine symmetrische Anordnung der Öffnungen und der Strömungskanäle ergibt innerhalb des Gehäuses eine radialschubfreie Lagerung des Steuerelementes.

Für eine weiche Umsteuerung ist vorgesehen, dass die Steueröffnungen des hohlzylinderförmigen Steuerelementes beispielsweise als Langlöcher, Polygone oder in anderer Form ausgebildet sind. Die Lage auf dem Steuerelement und die Größe der Steueröffnungen ermöglicht eine druckstoßfreie Strömungsumschaltung. Ein Schließen einer Steueröffnung von einer angeschlossenen Rohrkammer ist gleichzeitig verbunden mit einem Öffnen einer vorher geschlossenen anderen Steueröffnung einer weiteren Rohrkammer und umgekehrt. Infolge der vergrößerten Steueröffnungen bzw. durch deren Lage auf dem Steuerelement kann eine Überschneidung mit den fest im Gehäuse angeordneten Strömungsöffnungen von den Überströmwegen erreicht werden. Die Überschneidung wirkt sich dabei günstig auf die Umsteuerung und das Verhalten der davon beeinflußten strömenden Flüssigkeitssäulen aus.

Während des Betriebes der Armatur herrschen am Umfang des Steuerelementes in wechselnden Bereichen verschiedene Druckzustände. Zur Erleichterung der Umschaltbewegung des Steuerelementes kann das Steuerelement auf dem Außenumfang mit mehreren Druckentlastungskanälen versehen werden. Damit werden bestimmte Zonen der Gleitfläche mit einem definierten Gegendruck beaufschlagt. Diese Art von Drukkentlastungskanäle können auch auf der äußeren Wandfläche des Steuerelementes und/oder auf einer gegenüberliegenden Armaturengehäusefläche angeordnet sein. Je nach deren Form und Ausbildung erfolgt in den Druckentlastungskanälen eine kontinuierliche oder alternierende Durchströmung.

Eine günstige Herstellungsmöglichkeit ergibt sich, wenn das Steuerelement auf einer mäanderförmig verlaufenden Fläche des Gehäuses drehbar gelagert ist, oder wenn eine als separates Bauteil ausgebildete Gehäuseinnenwand auf einer mäanderförmig verlaufenden Fläche des Gehäuses gelagert ist. Zwischen den Armen der Mäander sind dann eine Art von Stichkanälen ausgebildet, die gleichzeitig als Überströmkanal innerhalb des Gehäuses wirken. Somit kann ein solches Gehäuse mit geringem Aufwand erstellt werden, da dadurch ungünstige Hinterschnitte vermieden werden. Ebenso kann das Steuerelement auf mehreren Einzelflächen des Gehäuses drehbar gelagert werden.

Nur bei der Verwendung von einem Steuerelement mit fester Trennwand ist innerhalb des Gehäuses ein Axiallager vorgesehen, an dem sich das Steuerelement abstützt. Für ein Steuerelement, bei dem die Hochdruckseite zwischen zwei festen Trennwänden ausgebildet ist, wird ein Axiallager nicht prinzipiell benötigt. Bei letzter Variante hat es sich als vorteilhaft erwiesen, dass ein im Gehäuse angeordneter Ringraum mit der Hochdruckseite verbunden ist. Dies erlaubt eine einfachere Abdichtung im Bereich der Anschlüsse.

Andere Ausgestaltungen sehen vor, dass das Gehäuse mit je einem Anschluss zur Verbindung mit einer Rohrkammer und mit je einem Anschluss für eine hochdruckseitige Zulauföffnung und eine niederdruckseitige Ablauföffnung versehen ist. Somit kann die Anzahl von Dichtstellen an der Armatur minimiert werden. Das Gehäuse kann dabei mit einer axial und/oder radial angeordneten hochdruckseitigen Zulauföffnung versehen sein. Eine axial angeordnete Zulauföffnung ist an einer Stirnseite des Gehäuses angeordnet, wobei das erste Rohrleitungssystem an einer solchen hochdruckseitigen Zulauföffnung angeordnet ist. Diese Ausbildung erleichtert die Abdichtung der Armatur in einfacher Weise, da hier nur eine statische Dichtung notwendig ist.

Weitere Ausgestaltungen sehen hierzu vor, dass der hochdruckseitigen Zulauföffnung eine Stützelemente aufweisende Strömungsumlenkung nachgeordnet ist und die Strömungsumlenkung eine Lagerung für das Steuerelement umgibt. Diese Maßnahme dient ebenfalls der Baulängenverkürzung und der Verbesserung der Steifigkeit. Und dadurch, dass die hochdruckseitige Zulauföffnung mit der Strömungsumlenkung und der Lagerung angeordnet in einem Deckelteil sind, ergibt sich eine verbesserte Lagerung des Steuerelementes bei gleichzeitig vereinfachter Herstellungsmöglichkeit.

Ebenso kann das Gehäuse mit einer axial und/oder radial angeordneten niederdruckseitigen Ablauföffnung versehen sein.

Ausführungsbeispiele der Erfindung sind in den Zeichnungen dargestellt und werden im Folgenden näher beschrieben. Es zeigen die
- Fig. 1: eine Anlage gemäß dem Stand der Technik, die
- Fig. 2: eine Armatur im Querschnitt mit Darstellungen von Schnittebenen der Fig. 3a bis 7, die
- Fig. 3a & 3b: zwei um 90° versetzte Schnittansichten der Armatur in einem ersten Betriebszustand, die
- Fig. 4a & 4b: zwei um 90° versetzte Schnittansichten der Armatur in einem zweiten Betriebszustand, wobei gegenüber den Fig. 3a & 3b das Steuerelement jeweils um 90° verdreht dargestellt ist, die
- Fig. 5a & 5b: zwei 3D-Ansichten der Armatur im Teilschnitt, die
- Fig. 6: eine Konstruktion mit Antrieb auf eine Trennwand, die
- Fig. 7: eine Armatur mit zusätzlichem Steuerzylinder, die
- Fig. 8: eine Armatur mit zwei Trennwänden, die
- Fig. 9: eine Armatur mit einem Steuerelement in Form eines Vollzylinders, die
- Fig.10a & 10b: zwei um 90°versetzte Schnittansichten einer kürzeren Armatur in einem ersten Betriebszustand, die
- Fig. 11: eine perspektivische Ansicht des Steuerelementes der Fig. 10a & 10b und
- Fig. 12: eine perspektivische Außenansicht der kürzeren Armatur.

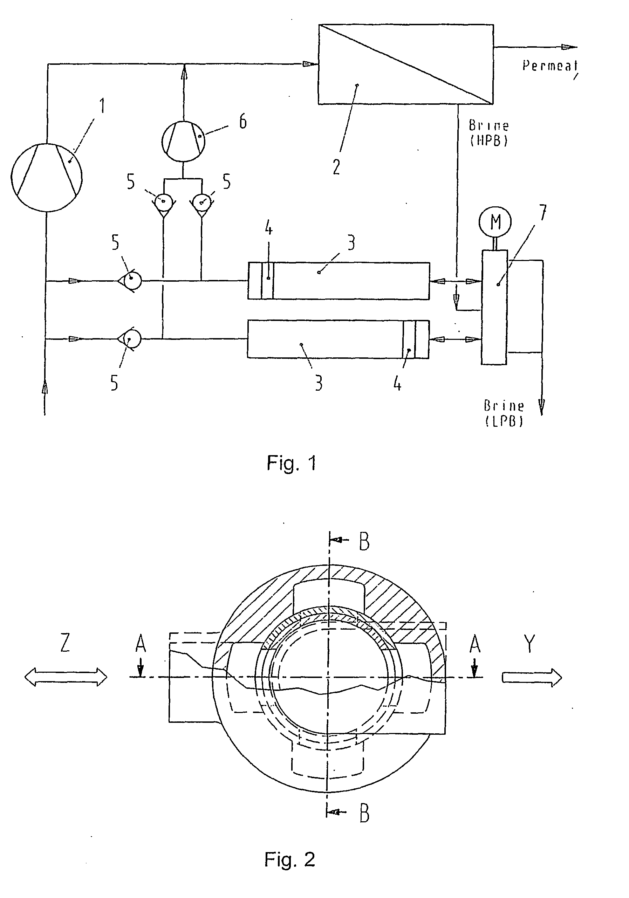

In der Fig.1 ist die Wirkungsweise einer Armatur gemäß dem Stand der Technik am Beispiel einer Reverse-Osmose-Anlage dargestellt. Eine Hochdruckpumpe 1 fördert ein zu reinigendes Fluid, gewöhnlich Wasser in Form von See-, Meer-, Brack- oder auch Abwasser, zu einem oder mehreren Reverse-Osmose-Modulen 2. Infolge des hohen Druckes innerhalb dieser Module 2 tritt an den darin angeordneten Membranen ein Abscheideeffekt auf. Hinter den Membranen fließt gereinigtes Wasser, das sogenannte Permeat, mit geringem Druck ab, wird gesammelt und einer weiteren Verwendung zugeführt.

Ein aus den Reverse-Osmose-Modulen 2 abfließendes ungereinigtes Fluid, das sogenannte Brine, weist nach dem Abscheideprozess eine höhere Konzentrationsdichte an Schadstoffen auf, gewöhnlich Salze, und wird zur ursprünglichen Quelle abgeleitet. Infolge seines hohen Energieinhaltes in Form von Druckenergie, wird das Brine über eine Armatur 7 zur Energierückgewinnung in einen 2-Kammer-Drucktauscher geleitet. In dessen Rohrkammern 3 sind unter Druckeinfluss verschiebbare Trennkolben 4 angeordnet, die eine Trennung zwischen jeweils zwei unterschiedlich mit Druck beaufschlagten Räume bilden. Es sind auch Anlagen mit Rohrkammern ohne Trennkolben bekannt, jedoch kann es darin zu unerwünschten Durchmischungen zwischen den verschiedenen Flüssigkeiten kommen, wenn das System aus dem Gleichgewicht gerät oder die Steuerzeiten nicht mehr stimmen.

Der hohe Druck des Brine drückt dabei einen in einer in der Fig. 1 oberen, ersten Rohrkammer 3 befindlichen Kolben 4 zur von der Armatur 7 entfernt liegenden Seite und überträgt den Druck auf ein darin befindliches und auf der anderen Kolbenseite befindliches Fluid. Dabei wird der hohe Druck auf ein links vom Kolben befindliches noch zu reinigendes, druckärmeres Fluid übertragen. Dieses Fluid strömt dann bereits mit hohem Druck auf der linken Seite der oberen Rohrkammer 3 aus und durch Rückschlagarmaturen 5 einer Boosterpumpe 6 zu, die innerhalb eines zweiten Rohrleitungssystems angeordnet ist. Mit Hilfe der Boosterpumpe 6 wird dann nur noch derjenige geringe Druckabfall kompensiert, der beim osmotischen Reinigungsprozess in den Modulen 2 entsteht. Die Boosterpumpe 6 muß infolge der Energierückgewinnung nur noch diejenige Druckdifferenz erbringen, die innerhalb der Reverse-Osmose-Module verloren geht. Die Hochdruckpumpe 1 kann deshalb wesentlich kleiner und damit kostengünstiger gestaltet sein, als bei einer Anlage ohne Energierückgewinnung.

Erreicht der Kolben 4 innerhalb der ersten Rohrkammer 3 das Kammerende, dann wird die Armatur 7 umgeschaltet, wodurch für die erste Rohrkammer nunmehr eine Verbindung zur Atmosphäre hergestellt wird. Der Vordruck innerhalb einer zur Hauptpumpe 1 führenden Saugleitung reicht aus, um das in der ersten oberen Rohrkammer 3 befindliche nun entspannte Brine mit einem zu reinigenden Fluid wieder nach rechts aus der oberen Rohrkammer 3 herauszudrücken und es zur Atmosphäre hin abfließen zu lassen. Während des Ausstoßvorganges des Brine aus der ersten Rohrkammer 3 wird über die Armatur 7 gleichzeitig untere zweite Rohrkammer 3 mit dem hohen Druck des Brine beaufschlagt. Der Ausstoßvorgang eines entspannten Brine ist in der zweiten unteren Rohrkammer 3 dargestellt.

Durch entsprechende zyklische Umschaltungen der Armatur 7 erfolgt eine wechselweise Druckbeaufschlagung der beiden Rohrkammern 3 und damit eine effiziente Energierückgewinnung. Aufgrund der 3-Wegefunktion innerhalb der Armatur können beim Umschaltvorgang Druckstöße entstehen, die die Membranen innerhalb der Reverse-Osmose-Module 2 gefährden. Zu diesem Zweck sind zusätzliche besondere Druckausgleichsöffnungen in dem Steuerelement der Armatur 7 vorzusehen, um diese Gefahr zu minimieren. Ein weiterer Nachteil ergibt sich durch einen während der Umschaltbewegung einstellenden Radialschub, der nicht ausgeglichen ist.

In der Fig. 2, einem Querschnitt durch eine erfindungsgemäße Armatur, sind zwei um 90° zueinander versetzt angeordnete Schnittebenen A - A und B - B eingezeichnet, mit deren Hilfe die Wirkungsweise der Armatur in den nachfolgenden Figurenbeschreibungen erklärt wird. Ein Doppelpfeil Z zeigt hierbei die Strömungsrichtung von und zu den - hier nicht dargestellten - Rohrkammern eines Drucktauschers an; der einfache Pfeil Y zeigt die Abflussrichtung eines aus der Armatur abfließenden, entspannten Brine an.

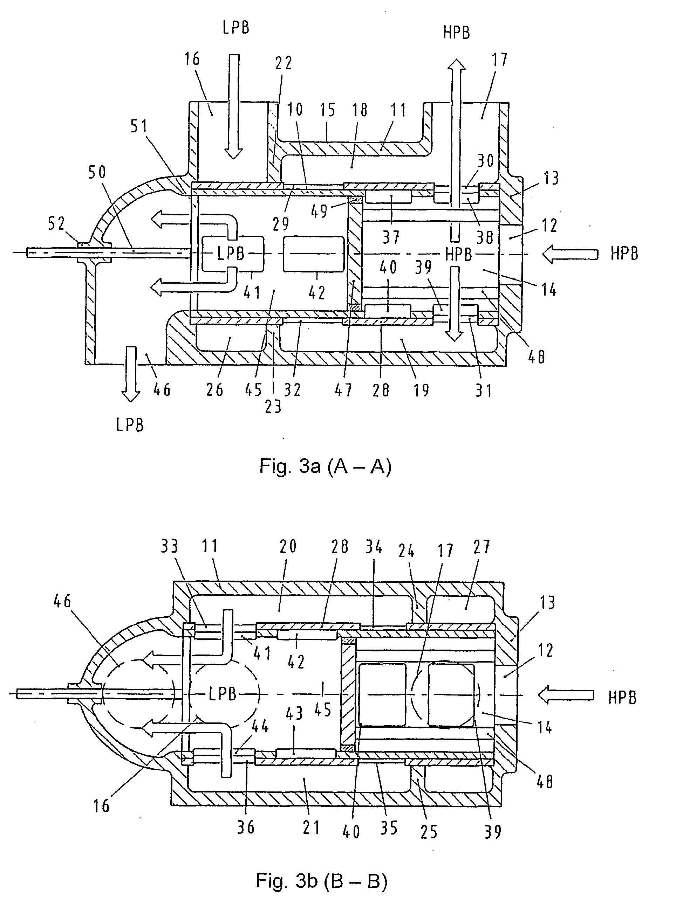

In den Fig. 3a und 3b ist eine erfindungsgemäße Armatur in zwei, jeweils um 90° zueinander versetzt angeordneten Schnitten dargestellt. Die Lage dieser Schnitte A - A und B - B ist Fig. 2 zu entnehmen und bei diesen Schnittdarstellungen bleibt die Lage eines hohlzylinderförmiges Steuerelementes 10 immer unverändert.

Das hohlzylinderförmige Steuerelement 10 ist drehbar im Gehäuse 11 der Armatur angeordnet. Aus den Reverse-Osmose-Modulen 2 strömt das unter hohem Druck stehende Brine, im folgenden Hochdruck-Brine (HPB) genannt, aus und tritt unter zu Hilfenahme eines - nicht dargestellten - vorgeschalteten Sammlers durch eine einzige hochdruckseitige Zulauföffnung 12 in einen Hochdruckraum 14 der Armatur ein. Dieses Beispiel zeigt eine Armatur zur Verbindung mit einem Zweirohr-Drucktauscher analog der Darstellung von Fig. 1. Aus diesem Grunde wurde auf die Darstellung der an die Armatur angeschlossenen Rohrkammern verzichtet.

Das Gehäuse 11 dieser Armatur verfügt an der Außenwand 15 über zwei Anschlüsse 16, 17, an die - nicht dargestellte - Rohrleitungen zur Verbindung mit ebenfalls nicht dargestellten Rohrkammern 3 angeschlossen sind. Das Ausführungsbeispiel des Gehäuses 11 ist hierbei mit integrierten Strömungskanälen 18 - 21 und zwei Ringräumen 26, 27 versehen, mit deren Hilfe eine Verbindung zwischen den Anschlüssen 16, 17 und den an einer Gehäuseinnenwand 28 angeordneten Strömungsöffnungen 29 - 36 erfolgt. Die Gehäuseinnenwand 28 ist hier aus konstruktiven Gründen als ein hohlzylinderförmiges Wandelement ausgebildet, welches dichtend im Gehäuse 11 angeordnet ist. Sie kann ebenso ein fester Bestandteil des Gehäuses 11 sein, wenn dieses beispielweise als eine Gusskonstruktion ausgebildet ist. Die Gehäuseinnenwand 28 dient gleichzeitig als radiale Lagerung für das hohlzylinderförmige Steuerelement 10. Die Wand des Steuerelementes 10 ist von mehreren Steueröffnungen 37 - 44 durchdrungen.

In der Darstellung der Fig. 3a tritt ein durch einen Pfeil HPB gekennzeichnetes Hochdruck-Brine durch die Zulauföffnung 12 in den Hochdruckraum 14 des Gehäuse 11 ein. Der Hochdruckraum 14 ist innerhalb des Steuerelementes 10 angeordnet und in axialer Richtung durch eine gehäusefeste Stirnwand 13 und eine Trennwand 47 begrenzt. In diesem Ausführungsbeispiel ist die Trennwand 47 mit Hilfe von Dichtungen 49 gegenüber dem Steuerelement 10 abgedichtet. Und die Trennwand 47 ist durch Streben 48 mit dem Gehäuse 11, hier insbesondere mit der Stirnwand 13 drehfest verbunden. Durch diese konstruktive Ausbildung wird das drehbare Steuerelement 10 während seiner Schaltbewegungen von axialen Druckkräften entlastet. Für die Dichtung 49 können an sich bekannte Lösungen Anwendung finden.

Im Steuerelement 10 im Bereich des Hochdruckraumes 14 angeordnete Steueröffnungen 37 - 40 weisen hierbei einen anderen Öffnungswinkel auf als die damit korrespondierenden Strömungsöffnungen 30, 31, 34 ,35 in der Gehäuseinnenwand 28. Durch eine geeignete Wahl eines Öffnungswinkels wird erreicht, dass für einen kurzen Zeitraum während des Umschaltens von dem Steuerelement 10 die mit der Armatur über die Anschlüsse 16, 17 in Wirkverbindung stehenden - hier nicht dargestellten - Rohrkammern gleichzeitig unter hohem Druck der Zulauföffnung 12 stehen. Infolgedessen werden die Membranen der Reverse-Osmose-Anlage gefährdende Druckschwankungen vermieden.

Im Gehäuse 11 ist das Steuerelement 10 drehbar angeordnet. Etwa im mittleren Bereich des Gehäuses befindet sich die mit Streben 48 drehfest am Gehäuse 11 befestigte Trennwand 47. Die Trennwand 47 bedingt innerhalb des Steuerelementes 10 eine Aufteilung in zwei Räume 14, 45 mit unterschiedlichen Druckbereichen. Der Raum 14 ist hierbei ständig mit dem Hochdruckbereich HPB von den Membranmodulen verbunden. Dagegen ist der in Fig. 3a links von der Trennwand 47 liegende andere Raum 45 mit einem Anschluss 46 für den durch den Pfeil LPB gekennzeichneten Niederdruckbereich des entspannten, aus den Rohrkammern zurückfließenden Brine verbunden. Da sich das Steuerelement 10 relativ zur Trennwand 47 bewegt, ist eine für die abzudichtenden Druckverhältnisse geeignete Dichtung 49 vorgesehen.

Das Steuerelement 10 wird durch eine Antriebswelle 50 angetrieben, deren eines Ende durch einen Gehäusedurchtritt 52 auf der Niederdruckseite nach außen geführt ist. Die Drehbewegung läuft kontinuierlich oder schrittweise, die Geschwindigkeit wird in Abhängigkeit der übrigen Systemkomponenten bestimmt.

Die Wirkungsweise der in den Fig. 3a und 3b dargestellten erfindungsgemäßen Umschaltarmatur ist bei unveränderter Stellung des Steuerelementes 10 wie folgt:
Durch die hier axial angeordnet einzige Zulauföffnung 12 strömt ein Hochdruck-Brine HPB in den Hochdruckraum 14 ein. Diese Gestaltung reduziert die Anzahl der Anschlüsse und das Gesamtvolumen der Armatur. Selbstverständlich kann die Zulauföffnung 12 für die Einspeisung des Hochdruck-Brine HPB auch radial angeordnet sein, jedoch muss dann die Armatur länger ausgebildet werden und die Zuführung muss in einem Gehäusebereich erfolgen, in dem keine Überdeckung mit dem Steuerelement 10 stattfindet. Der Abfluss des Niederdruck-Brine LPB aus der Armatur erfolgt aus dem Anschluss 46. Grundsätzlich stellt die Armatur sicher, dass von den mit den Anschlüssen 16 und 17 verbundenen Rohrkammern immer eine davon mit Hochdruck-Brine befüllt wird und aus der anderen das dann entspannte Niederdruck-Brine entleert wird. Nur für eine kurze Zeit während des Umschaltens erhalten beide Rohrkammern gleichzeitig hohen Druck.

### Erster Betriebszustand (Fig. 3a und 3b):

Das Hochdruck-Brine HPB strömt aus dem Hochdruckraum 14 durch im Steuerelement 10 befindliche, einander gegenüberliegende Steueröffnungen 38 und 39 und in der Gehäuseinnenwand 28 befindliche, ebenfalls einander gegenüberliegende Strömungsöffnungen 30 und 31 in einen in das Gehäuse 11 integrierten Ringraum 27, vergleiche Fig. 3b. Zwei den Ringraum 27 in axialer Richtung teilweise begrenzende Trennwände 24, 25 bildet gleichzeitig eine Lagerung für die Gehäuseinnenwand 28. Aus dem Ringraum 27 strömt das Hochdruck-Brine HPB zum Anschluss 17 einer ersten Rohrkammer. Die übrigen Strömungsöffnungen 34, 35 zu den Kanälen 20 und 21, die innerhalb der Armatur einen Strömungsweg zum Ringraum 26 und zum Anschluss 16 bilden, sind durch das Steuerelement 10 blockiert. Damit wird die am Anschluss 17 befindliche erste Rohrkammer befüllt.

Gleichzeitig steht über den Anschluss 16 die Armatur in Wirkverbindung mit der anderen zweiten Rohrkammer. Aus dieser strömt ein in der zweiten Rohrkammer entspanntes Niederdruck-Brine LPB zurück zur Armatur und tritt über den Anschluß 16 in einen Ringraum 26 und durch einander gegenüberliegende Strömungsöffnungen 33 und 36 sowie über im Steuerelement 10 befindliche, ebenfalls einander gegenüberliegende Steueröffnungen 41 und 44 in den Niederdruckraum 45 ein. Von dort aus strömt das Niederdruck-Brine LPB in einen Anschluss 46, wodurch eine Entleerung der Rohrkammer zur Atmosphärenseite hin erfolgt. Alle anderen in der Gehäuseinnenwand 28 angeordneten, zu Kanälen 18 und 19 führenden Strömungsöffnungen 29, 32 sind durch das Steuerelement 10 abgesperrt. Zwei den Ringraum 26 in axialer Richtung teilweise begrenzende Trennwände 22, 23 bilden gleichzeitig eine weitere Lagerung für das Steuerelement 10, vergleiche Fig. 3a.

Das Hochdruck-Brine, das durch den Anschluss 17 in die erste Rohrkammer strömt, überträgt seine Druckenergie an ein darin befindliches noch zu reinigendes Fluid, welches anschließend mit höherem Druck zu den Reverse-Osmose-Module gepresst wird. Die Drehgeschwindigkeit des Antriebs an der Antriebswelle 50 (nicht dargestellt) und die Wahl des Öffnungsquerschnittes der Steueröffnungen 37 - 40 stellen sicher, dass kurz bevor die Rohrkammer am Anschluss 17 vollständig mit Hochdruck-Brine gefüllt ist, der Befüllvorgang beendet wird. Gleichzeitig wird der Entleerungsvorgang der zweiten Rohrkammer am Anschluss 16 ebenfalls beendet.

Die auf der Hochdruckseite jeweils paarweise zusammenwirkenden und einander gegenüberliegenden Öffnungen 38/30 und 39/31 bleiben jedoch etwas länger geöffnet als die Paarungen der Öffnungen 41/33 und 44/36 auf der Niederdruckseite. Dadurch erhält nun eine am Anschluss 16 befindliche Rohrkammer durch die Öffnungspaarungen 37/34 und 40/35, die Kanäle 20 und 21 sowie den Ringraum 26 schon hohen Druck, während die Öffnungspaarungen 38/30 und 39/31 gerade schließen. So ist gewährleistet, dass ohne Druckstoß der zweite Betriebszustand mit dem Wechsel der Strömungsrichtung zu den Rohrkammern beginnt.

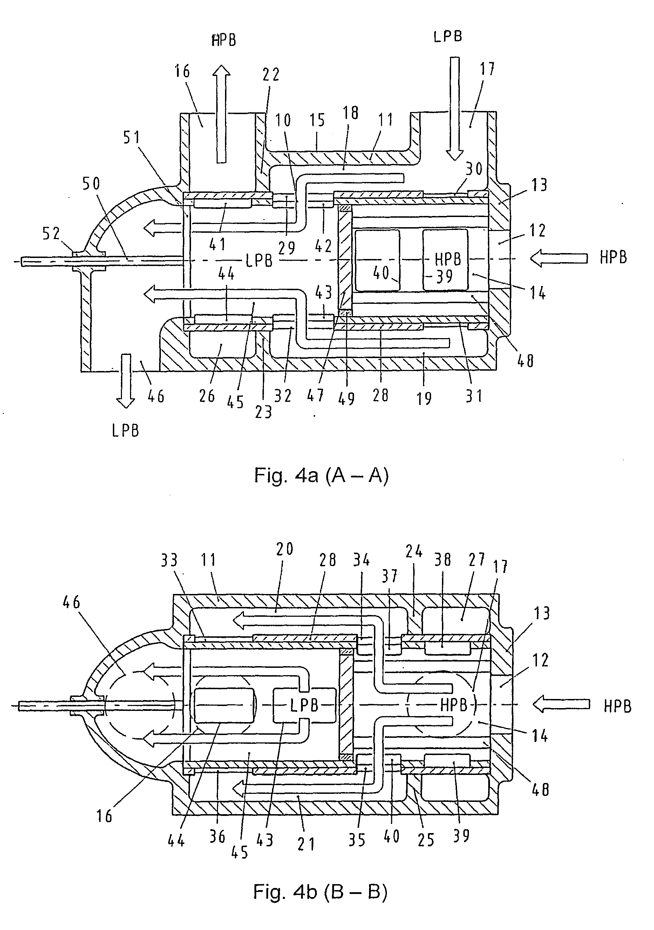

### Zweiter Betriebszustand (Fig. 4a/b):

In diesen Figurendarstellungen ist, im Gegensatz zu den Darstellungen der Fig 3a und 3b, das Steuerelement 10 innerhalb des Gehäuses 11 um 90° gedreht dargestellt und die Strömungsverhältnisses an den Anschlüssen 16, 17 zu den Rohrkammern haben sich umgekehrt. Auf eine Darstellung von Zwischenstellungen während einer Verdrehbewegung wird aus Gründen einer besseren Übersichtlichkeit verzichtet.

Sind die Paarungen der Öffnungen 38/30 und 39/31 in Schließstellung, so wird die nun zu befüllende Rohrkammer am Anschluss 16 weiter befüllt. Dagegen wird die Rohrkammer am Anschluss 17 durch den Ringraum 27, die einander gegenüberliegenden Kanäle 18 und 19 sowie die einander gegenüberliegenden Paarungen der Öffnungen 29/42 und 32/43 durch den Niederdruckraum 45 und den Anschluss 46 entleert. Im zweiten Betriebszustand wird die Druckenergie des Hochdruck-Brine HPB in die Rohrkammer am Anschluss 16 übertragen, während die Rohrkammer am Anschluss 17 entleert wird. Gegen Ende des Vorgangs sind analog dem ersten Betriebszustand die Paarungen der Öffnungen 37/34 und 40/35 sowie 38/30 und 39/31 für kurze Zeit gleichzeitig geöffnet, so dass wieder ein druckstoßfreier Übergang in den ersten Betriebszustand stattfinden kann.

Das Steuerelement 10 ist auf seiner inneren und/oder äußeren Umfangsfläche, hier im Bereich der Trennwand 47, mit einem Dichtungselement 49 ausgestattet. Dieses verhindert ein Überströmen zwischen der Hochdruck- und Niederdruckseite und hält damit den Wirkungsgrad des Gesamtsystems aufrecht. Entsprechend der Dimensionierung einer solchen Anlage können auch mehrere solcher Dichtungselemente 49 am Steuerelement 10 Anwendung finden.

Eine Antriebswelle 50, mit deren Hilfe das Steuerelement 10 in Rotation versetzt wird, ist durch übliche Lagerelemente gehalten und mittels bekannter Dichtungselemente gegen Flüssigkeitsaustritt gesichert. Die Kräfteübertragung zwischen Antriebswelle 50 und Steuerelement 10 erfolgt durch an sich bekannte Kraftübertragungsmittel 51. Dies können Streben, Scheibenelemente oder sonstige andere Mittel sein, die einen Strömungsdurchgang vom Niederdruckraum 45 zum Anschluss 46 ermöglichen. Die Krafteinleitung erfolgt im Beispiel der Fig. 3a bis 4b an der Stirnseite des Steuerelementes 10.

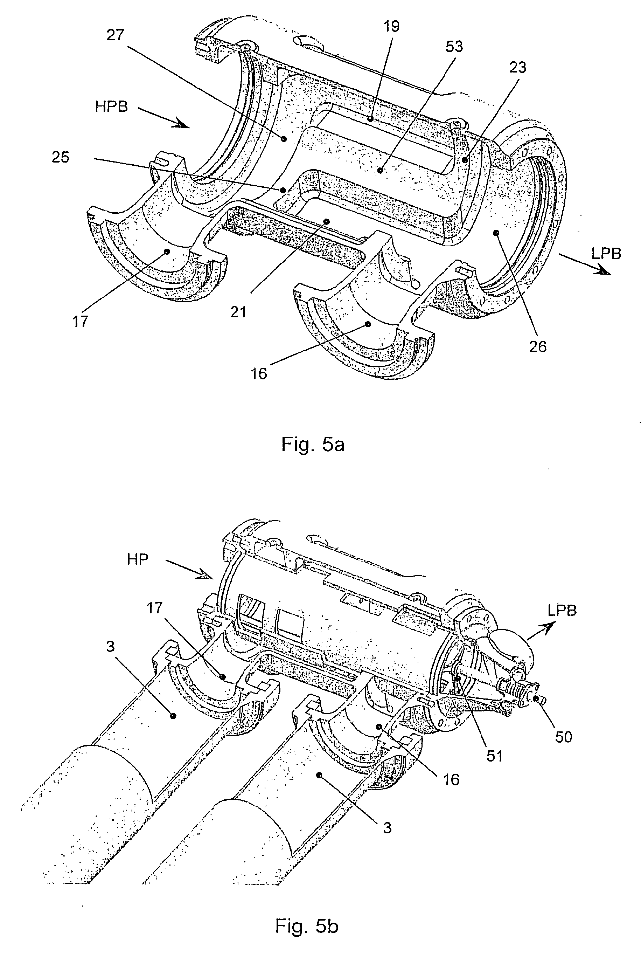

Die Fig. 5a ist eine dreidimensionale Ansicht auf ein teilweise geöffnetes Gehäuse 11 der Armatur. Es ist nur das Gehäuse 11 ohne die im Ausführungsbeispiel verwendete, separate Gehäuseinnenwand 28 gezeigt. Dadurch wird deutlich, dass die von den Ringräumen 26, 27 ausgehenden insgesamt vier Kanäle 18 bis 21 eine Art von Stichkanälen darstellen, deren dazwischen ausgebildeten Wandteile einen mäanderförmigen Verlauf aufweisen. Somit ergeben sich ebenfalls mäanderförmig verlaufende Flächen 53, die als Lagerflächen zur Abstützung der Gehäuseinnenwand 28 dienen. Die Stirn- oder Schmalseiten der Trennwände 22 bis 25 üben dabei gleichzeitig die Funktionen von Lagerflächen aus. Die Gehäuseinnenwand 28 kann auch als integrales Bauteil des Gehäuses 11 gestaltet sein. Durch eine solche Ausbildung der Strömungsführung innerhalb des Gehäuses 11 können jeweils einander gegenüberliegende Strömungskanäle oder Strömungsöffnungen geschaffen werden, aufgrund derer eine von Radialkräften befreite Bewegung des Steuerelementes 10 möglich ist.

Fig. 5b zeigt in entsprechende Anordnung zur Fig. 5a einen Schnitt durch eine betriebsbereite eingebaute Armatur. Deren Anschlussstutzen 16, 17 sind unmittelbar mit zwei Rohrkammern 3 verbunden. Das mit den Steueröffnungen 37 - 44 versehene hohlzylindrische Steuerelement 10 rotiert innerhalb der mit den Strömungsöffnungen 29
- 36 versehenen Gehäuseinnenwand 28. Der Antrieb des Steuerelementes 10 erfolgt an dessen Stirnseite über die abgedichtete Antriebswelle 50, die ein sternförmiges Kraftübertragungselement 51 einwirkt. Die hier durch die Schnittdarstellung besser erkennbare Strömungsführung entspricht der Darstellung von den Fig 3a und 3b.

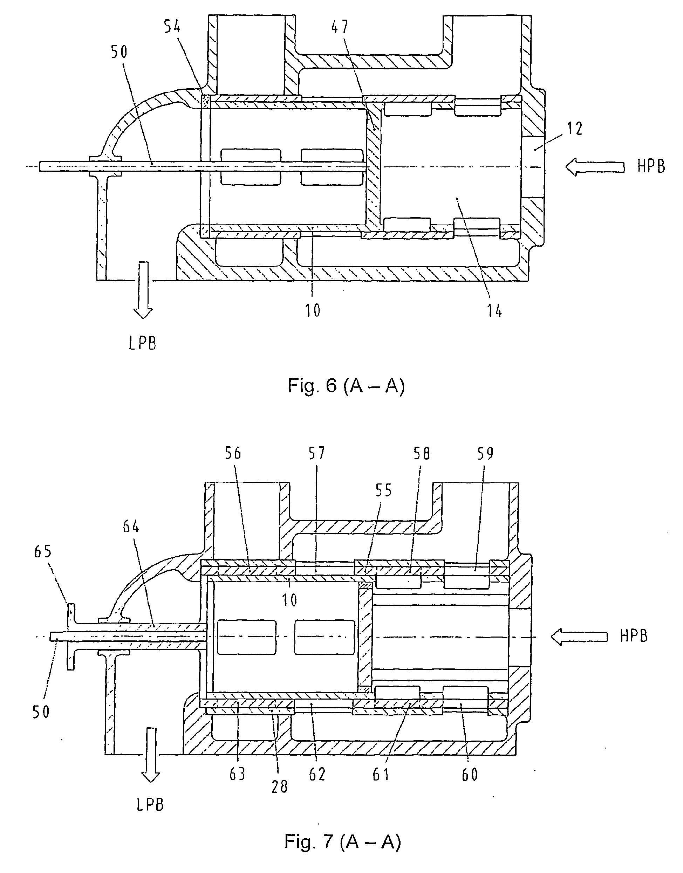

Fig. 6 stellt eine vereinfachte Bauform der erfindungsgemäßen Armatur dar. Hierbei ist die Trennwand 47 als ein fester Bestandteil des Steuerelementes 10 ausgebildet. Die Befestigung der Trennwand 47 kann durch übliche Mittel erfolgen. Im Beispiel ist die Trennwand 47 als ein integraler Bestandteil des Steuerelementes 10 ausgebildet, welches durch eine gieß-, schweiß- oder andere bekannte technische Verbindungsart möglich ist. Dadurch entfällt zwar die in den Figuren 3a - 4b gezeigte Befestigung der Trennwand 47 mittels Streben am Gehäuse 11. Der Antrieb des Steuerelementes 10 erfolgt über die Antriebswelle 50 direkt auf die Trennwand 47, wodurch weitere, sonst benötigte Verbindungsmittel 51 zwischen Antriebswelle 50 und Steuerelement 10 entfallen. Da die Trennwand 47 das Innere der Armatur in zwei Bereiche unterschiedlichen Druckes trennt, ist nunmehr mit einer resultierenden Axialkraft des Steuerelementes 10 zu rechnen. Eine solche axiale Kraftkomponente wirkt in Richtung des in den Hochdruckraum 14 einströmenden Hochdruck-Brine HPB. Dieses wirkt auf die Trennwand 47 ein und erzeugt im Steuerelement eine Kraftkomponente. Diese wird mit einem einfachen zusätzlichen Axiallagerelement 54 abgefangen und in das Gehäuse 11 eingeleitet.

In Fig. 7 ist eine alternative Konstruktion der Armatur mit zusätzlichen Steuermöglichkeiten für variable Öffnungs- und Schließzeiten während des Betriebes dargestellt. Ein zusätzlicher Steuerzylinder 55 befindet sich konzentrisch zwischen der Gehäuseinnenwand 28 und dem Steuerelement 10. Der Steuerzylinder 55 hat die Funktion einer zusätzlichen hohlzylinderförmigen Gehäuseinnenwand, ist als ein separates Bauteil gestaltet und kann mit seinen darin angeordneten Strömungsöffnungen relativ zum Gehäuse verdreht werden. Er verfügt über weitere, dem Steuerelement 10 gegenüberliegende Strömungsöffnungen 56 - 63, deren Erstreckung am Umfang beziehungsweise deren Querschnitt kleiner oder gleich groß wie die korrespondierenden Strömungsöffnungen 29 - 36 der Gehäuseinnenwand 28 ist. Durch eine geeignete Wahl der Umfangserstreckung dieser korrespondierenden Strömungsöffnungen 56 - 63 ist es möglich, den Öffnungs- bzw. Schließzeitpunkt der Armatur durch Verdrehen des Steuerzylinders 55 zu beeinflussen. Die Verstellung des Steuerzylinders 55 kann mittels einer Hohlwelle 64 erfolgen, die konzentrisch zur Antriebswelle 50 läuft und über einen Flansch 65 verstellt werden kann. Die Konstruktion ist so ausgeführt, dass dies während des Betriebes zur Anpassung an verschiedene Betriebszustände geschehen kann. Ebenso kann eine andere Art der Verstellung Anwendung finden. Das gezeigte Ausführungsbeispiel ist nicht auf diese Art der Verstellung beschränkt.

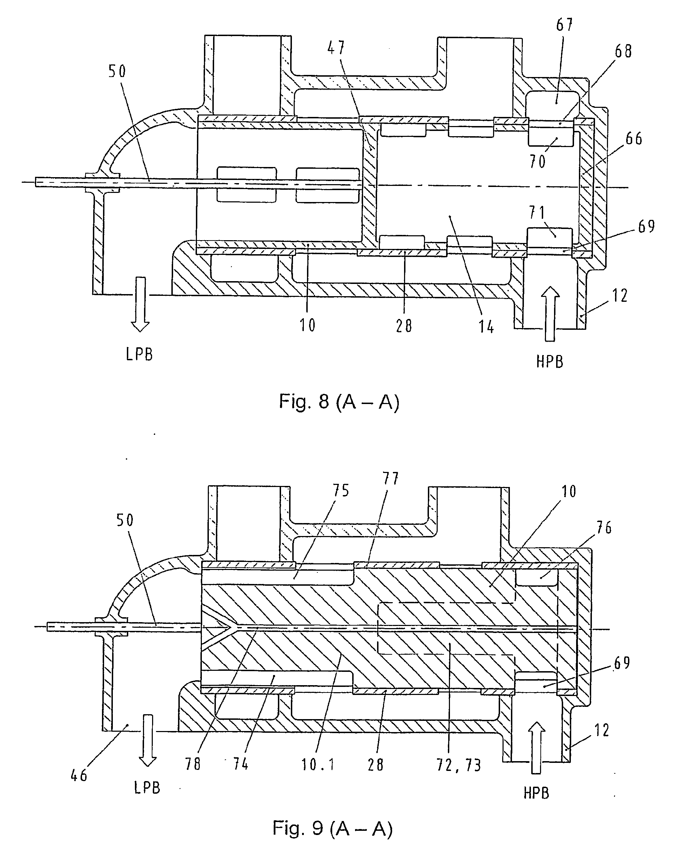

In der Fig. 8 ist eine feste Verbindung zwischen dem Steuerelement 10 und der Trennwand 47 gezeigt. Dadurch wird im Bereich der Hoch- und Niederdruckseite eine höhere Steifigkeit des Steuerelementes 10 erreicht. Um einem dann auftretenden, in der Fig. 8 zur linken Zeichnungsseite wirkenden Axialschub zu begegnen, ist eine weitere Trennwand 66 angeordnet, die den Hochdruckraum 14. im Inneren des Steuerelementes 10 nach rechts abschließt. Diese Maßnahme erhöht die Steifigkeit zusätzlich. Der Antrieb erfolgt über die Antriebswelle 50 direkt auf die Trennwand 47. Die hochdruckseitige Zulauföffnung 12 ist radial angeordnet, wozu das Steuerelement 10 und die Gehäuseinnenwand 28 entsprechend verlängert sind. Das Hochdruck-Brine HPB fließt durch die radiale Zulauföffnung 12 in einen Ringraum 67, durch zwei oder mehr Strömungsöffnungen 68, 69 in der Gehäuseinnenwand 28 und durch zwei oder mehr Öffnungen 70, 71 im Steuerelement 10 in den Hochdruckraum 14 ein. Die Öffnungen 70, 71 im Steuerelement 10 üben in diesem Beispiel keine Steuerfunktion, sondern dienen, analog einer Zulauföffnung 12, nur zur Befüllung des Hochdruckraumes 14.

In der Fig. 9 ist ein Steuerelement 10.1 gezeigt, das als eine Art Vollzylinder ausgebildet ist. Dadurch ergibt sich eine weitere Erhöhung von dessen Steifigkeit. In der Umfangsfläche des Steuerelementes 10.1 sind jeweils einander diametral gegenüberliegende Strömungskanäle 72 - 73 und 74 - 75 eingearbeitet. Somit verbleibt zwischen den Bodenbereichen der nutförmigen Strömungskanäle 72 - 75 eine ausreichend dicke Wandfläche, deren Dicke in einfacher Weise an die bestehenden Druckverhältnisse anzupassen ist. Die Formen der nutförmigen Strömungskanäle 72 - 75 werden auf die verwendeten Materialien abgestimmt, um Kerbspannungen im Steuerelement 10.1 zu verhindern. Analog einem hohlzylinderförmigen Verschlussstück 10 üben die Strömungskanäle 72, 73 die Funktion eines Hochdruckraumes und die Strömungskanäle 74, 75 die Funktion eines Niederdruckraumes aus. Ein Hochdruck-Brine HPB strömt über eine radial angeordnete hochdruckseitige Zulauföffnung 12 zu und tritt in einen Ringkanal 76 ein, der sowohl im Gehäuse oder, wie dargestellt, im Steuerelement 10.1 angeordnet sein kann. In beiden Fällen ist der Ringkanal 76 komplett umlaufend ausgebildet. Mit Hilfe eines das Steuerelement 10.1 in axialer Richtung durchdringenden Entlastungskanals 78 erfolgt ein Druckaustausch zwischen den Flächen an den axialen Stirnseiten. Gleichzeitig ist dabei an der hochdruckseitigen Stirnseite des Steuerelementes 10.1 ein Freiraum angeordnet, in der Zeichnung durch den rechtsseitigen fett gezeichneten Strich dargestellt, wodurch die entsprechende Fläche für den Druckausgleich einer Axialschubentlastung geschaffen ist.

In der dargestellten Anordnung strömt das Hochdruck-Brine HPB durch eine Strömungsöffnung 69 in der Gehäuseinnenwand 28 in den Ringkanal 76 des Steuerelementes 10.1 ein, von dem aus sich jeweils in axialer Richtung erstreckende nutförmige Strömungskanäle 72, 73 ausgehen. Von diesen Hochdruck-Strömungskanälen 72, 73 strömt das Fluid zu den in den vorstehenden Figuren erwähnten Strömungsöffnungen 30, 31, 34 und 35. Die Niederdruck-Strömungskanäle 74, 75 im Steuerelement 10.1 nehmen das Niederdruck-Brine LPB aus den in den vorstehenden Figuren erwähnten Strömungsöffnungen 29, 32, 33 und 36 auf und leiten es zum Anschluss 46. Auch hier tritt ein Niederdruck-Brine LPB immer in axialer Richtung aus dem Steuerelement 10.1 aus. Einander zugekehrte Enden der jeweiligen Strömungskanälen 72-75 sind mit Abstand zueinander angeordnet und bilden zwischen sich eine geschlossene ringförmige Dichtungszone 77 aus. Diese verhindert ein Überströmen zwischen den beiden Druckbereichen.

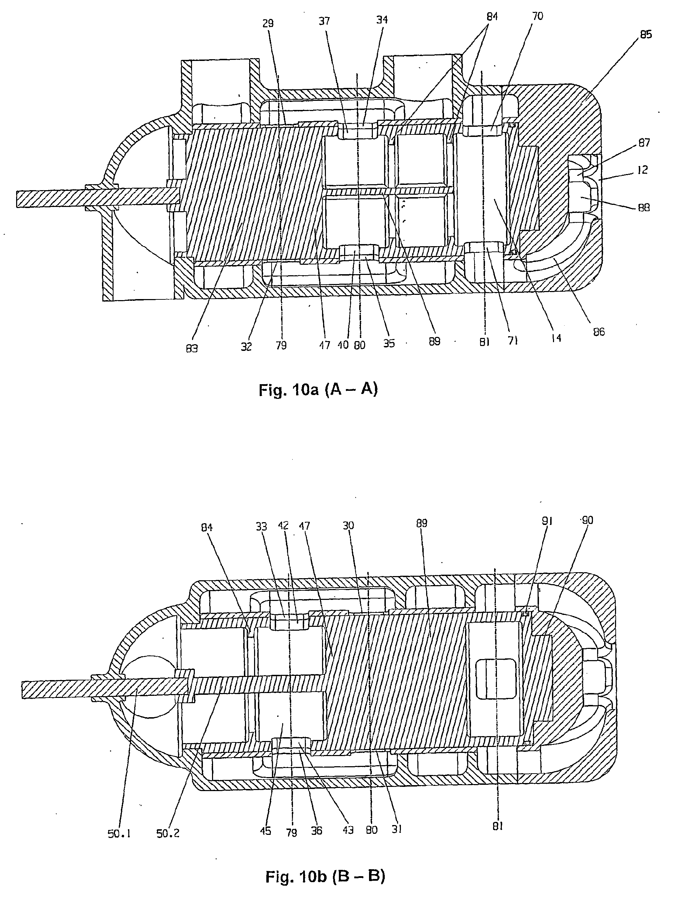

Fig. 10a und 10b zeigen eine Armatur mit kürzerer Baulänge und ebenfalls in zwei, jeweils um 90° zueinander versetzt angeordneten Schnittdarstellungen. Die Lage der Schnitte A - A und B - B erfolgt analog der Darstellung von Fig. 2 und auch hier ist die Lage des Steuerelementes 10 unverändert geblieben.

Die Armatur gemäß Fig. 10a und 10b weist durch eine andere Anordnung der Strömungsöffnungen eine kürzere Baulänge auf. Im Gehäuse 11 und im Steuerelement 10 ist die Lage der Strömungsöffnungen 29 - 36 und der Steueröffnungen 37, 40, 42, 43 jeweils auf Öffnungsebenen 79, 80 bezogen, die senkrecht zur Antriebswelle 50. 2 des Steuerelementes 10 angeordnet sind. Bei dieser Ausführungsform wurde gegenüber den anderen Ausführungsformen zwei Öffnungsebenen eingespart. Diese Ausführungsform verfügt insgesamt nur über drei Öffnungsebenen, wobei eine Öffnungsebene 81 nur der Zuströmung zum Hochdruckraum 14 dient. Die Öffnungsebene 81 kann entfallen, wenn eine axiale Zuströmung zum Steuerelement stattfindet.

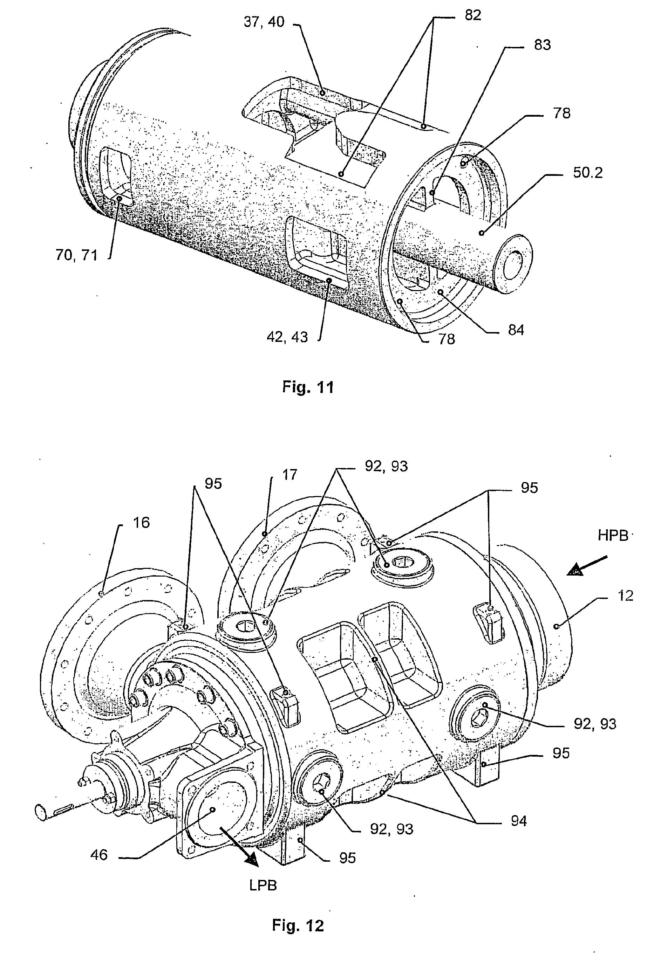

Zur Einsparung der zwei Öffnungsebenen wurden im Gehäuse in den Öffnungsebenen 79, 80 jeweils 4 Strömungsöffnungen über den Umfang verteilt angeordnet, von denen in der Fig. 10a die Öffnungen 29, 32, 34, 35 sichtbar sind. Bei dieser Ausführungsform mit zwei anschließbaren Rohrkammern sind an der Gehäuseinnenwand 28 in den Öffnungsebenen 79, 80 die jeweils 4 Strömungsöffnungen 30, 31, 34, 35 bzw. 29, 32, 33, 36 um jeweils 90° versetzt zueinander angeordnet. Mit Hilfe von im Steuerelement 10 angebrachten Steuertaschen 82 erfolgt eine Überleitung eines Hochdruck-Brine HPB von der einen Öffnungsebene 80 in axialer Richtung durch das Steuerelement 10 zur zweiten Öffnungsebene 79 des Gehäuses 11. Die Funktion einer Steuertasche 82 ist deutlicher erkennbar aus der perspektivischen Darstellung des Steuerelementes 10 in der Fig. 11.

Im Innenraum des hohlzylinderförmigen Steuerelementes 10 sind zusätzlich Versteifungen angeordnet, die als Rippen 83, 89 ausgebildet sind und als eine Art radial erstrekkender Strömungsteiler die Räume 14, 45 in Achsrichtung durchdringen. Die in der Fig. 10a im Schnitt dargestellten Versteifungsrippen 83, 89 erstrecken sich über den gesamten Durchmesser des hohlzylinderförmigen Steuerelementes 10 und verbessern dessen Steifigkeit gegenüber den einwirkenden äußeren und inneren, sowie ständig wechselnden Druckbelastungen. Die in Richtung der Antriebswelle 50.2 verlaufenden Ebenen der Versteifungsrippen sind um 90° zueinander verdreht angeordnet und schließen zusätzlich direkt an die Trennwand 47 an.

Im Innenraum des Steuerelementes 10 sind Versteifungen, hier in Form von Ringelementen 84, angeordnet. Diese erstrecken sich von der Innenwand des Steuerelementes 10 radial nach innen und ragen in die Innenräume 14, 85 ringförmig hinein. Auch diese versteifenden Ringelemente 84 verbessern insgesamt die Steifigkeit des Steuerelementes 10.

Die Zulauföffnung 12 ist in diesem Ausführungsbeispiel Bestandteil eines Deckelteiles 85, welches dichtend und kräfteübertragend mit dem Gehäuse 11 verbunden ist. Die Ausbildung als Deckelteil hat den Vorteil, dass das Gehäuse 11 an sich überwiegend zylinderförmig gestaltet ist und somit einfacher hergestellt werden kann. Innerhalb des Deckelteiles 85 ist eine Strömungsumlenkung 86 angeordnet. In der Strömungsumlenkung 86 sind mehrere Stützelemente 87 angeordnet, die innerhalb des Deckelteiles 85 mehrere Strömungskanäle 88 begrenzen. Mit der Strömungsumlenkung 86 wird ein axial in das Deckelteil 85 eintretendes Hochdruck-Brine HPB von den bogenförmig verlaufenden Strömungskanälen 88 umgelenkt und strömt dadurch axial oder halbaxial von außen in das Steuerelement 10 durch dessen Öffnungen 70, 71 in den Raum 14 ein.

Die mit den Steueröffnungen 37, 40 verbundenen, hier gabelförmig ausgebildeten Steuertaschen 82 sind am Außenumfang des Steuerelementes 10 angeordnet und liegen einander diametral gegenüber. Sie erstrecken sich in diesem Ausführungsbeispiel beiderseits der Versteifungsrippe 83 des Niederdruckraumes 45 und sind in dieser Darstellung nur teilweise sichtbar. Im Deckelteil 85 ist weiterhin eine Lagerung 90 und Abdichtung 91 für das Steuerelement 10 angeordnet.

In der Außenwand 15 des Gehäuses 10 sind mehrere Zugangsöffnungen 92 angeordnet, die durch Verschlusselemente 93 druck- und flüssigkeitsdicht verschlossen sind. Diese Zugangsöffnungen 92 sind aus fertigungstechnischen Gründen vorgesehen und erleichtern eine Gehäuseherstellung erheblich. Sie ermöglichen einen leichten Zugang zu den innerhalb des Gehäuses befindlichen Hohlräumen in Form der Ringräume 26, 27.

Fig. 10b zeigt einen gegenüber der Fig. 10a um 90° verdreht angeordneten Längsschnitt. Dadurch ist im Steuerelement 10 erkennbar, dass die Versteifungsrippe 83 jetzt senkrecht auf der Zeichenebene steht und nach Art eines Strömungsteiles innerhalb des Niederdruckraumes 45 angeordnet ist. Dagegen liegt auf der rechten Seite der Trennwand 47 die im Hochdruckraum 14 befindliche Versteifungsrippe 89 nunmehr innerhalb der Zeichenebene. In dem hier gezeigten Ausführungsbeispiel sind die Versteifungsrippen 83, 89 als integraler Bestandteil der Trennwand 47 ausgebildet, wobei die Versteifungsrippe 83 gleichzeitig auch Bestandteil der innerhalb des Steuerelements 10 befindlichen Antriebswellenteil 50.2 ist. Diese Ausbildung vereinfacht die Fertigung. Ebensogut können die versteifenden Elemente ohne eine direkte Wirkverbindung mit der Trennwand 47 in den Räumen 14, 45 angeordnet sein.

Aus der Zusammenschau der beiden Fig. 10a, 10b ist erkennbar, dass im Bereich des Raumes 45 alle Steuerungs- und Strömungsöffnungen 41 - 44 sowie 29, 32, 33, 36 in einer Öffnungsebene 79 zusammengefasst sind. Im Bereich des Raumes 14 sind analog die Steuerungs- und Strömungsöffnungen 37 - 40 sowie 30, 31, 34, 35 in der Öffnungsebene 80 zusammengefasst. Die Öffnungsebene 81 dient lediglich der radialen Einströmung des HPB in den Raum 14 und nimmt an den Umschaltvorgängen nicht teil. Somit ergibt sich insgesamt eine wesentlich verkürzte Ausführungsform einer erheblich verbesserten Steifigkeit der gesamten Armatur.

Die Fig. 11 zeigt eine perspektivische Ansicht auf das hohlzylinderförmige Steuerelement 10 gemäß den Fig. 10a, 10b. Es ist die Ansicht auf die Niederdruckseite des Steuerelementes 10 mit der aus dem Raum 45 herausragenden Antriebswellenteil 50.2. Deutlich erkennbar ist die Rippe 83, die innerhalb des Raumes 45 angeordnet ist und in Strömungsrichtung bzw. in Richtung der Antriebswelle 50.2 verläuft. Weiterhin erkennbar ist ein versteifendes Ringelement 84, welches umlaufend im Niederdruckraum 45 im Bereich von dessen Abströmseite angeordnet ist. Über den Umfang der Wandfläche des Steuerelementes 10 verteilt angeordnet sind mehrere in Axialrichtung verlaufende Druckentlastungskanäle 78. Mit deren Hilfe wird ein Achsschubbelastung ausgeglichen, wodurch die Lagerung wesentlich vereinfacht wird.

Am Außenumfang des Steuerelementes 10 sind gabelförmig ausgebildete und diametral gegenüberliegende Steuertaschen 82 angeordnet, die mit den Steueröffnungen 37, 40 des mit Hockdruck-Brine HPB beaufschlagten Raumes 14 in Verbindung stehen. Über die Steuertaschen erfolgt am Außenumfang des Steuerelementes 10 eine Strömungsumlenkung zwischen den beiden an die Armatur angeschlossenen Rohrkammern eines Drucktauschers. Mit Hilfe dieser Maßnahme ist auf der Seite des Niederdruck-Brine LPB eine Verlagerung aller Steuer- und Strömungsöffnungen in nur noch eine Öffnungsebene 79 möglich.

Die Ausbildung der Steuertaschen 82 in gabelförmiger Form hat den Vorteil, dass zwischen den dadurch gebildeten gabelförmigen Strömungswegen ein Stegelement 96 bleibt. Dieses ist in vorteilhafter Weise in der Ebene der Versteifungsrippe 83 angeordnet, wodurch die Kräfteübertragung und die Flächenpressungen zwischen rotierendem Steuerelement und Gehäuse optimiert wird. Bei stufig ausgebildeten Steuertaschen 82 wird auf die Anordnung des Stegelementes 96 verzichtet. Dies vergrößert zwar den für eine Umlenkung zur Verfügung stehenden Raum, es führt jedoch zu etwas ungünstigeren Strömungsverhältnissen während der Umschaltbewegung des Steuerelementes 10.

Verzichtet wurde auf eine Darstellung einer Art von kinematischen Umkehr der Steuertaschen. In analoger Ausbildung der mit dem Steuerelement 10 rotierenden Steuertaschen ist es möglich, diese im Gehäuse und dann in Form von stillstehenden Strömungstaschen anzuordnen. Eine Strömungsumlenkung des Brine in die Öffnungsebene 79 würde dann in der Gehäusewand und in den stillstehenden Strömungstaschen erfolgen.

Im Bereich des mit Hochdruck-Brine HPB beaufschlagten Raumes 14 sind am Steuerelement 10 die auf dem Umfang verteilt angeordneten Öffnungen 70, 71 erkennbar. Dadurch strömt ein Hochdruck-Brine HPB nach dem Durchfluss durch die - hier nicht dargestellte - Strömungsumlenkung im Deckelteil, aus radialer oder halbaxialer Richtung von außen nach innen in den Raum 14 das Steuerelementes hinein.

In Fig. 12 ist eine perspektivische Ansicht auf eine Armatur gemäß den Fig. 10-11 gezeigt. In der Gehäuseaußenwand 15 sind die Zugangsöffnungen 92 erkennbar, welche in Richtung der axialen Verlaufsebene der innerhalb des Gehäuses befindlichen Überströmkanäle angeordnet sind. Als Verschlusselemente 93 finden im Ausführungsbeispiel einfache Verschlussstopfen Verwendung, wobei jedoch auch andere Bauarten möglich sind. Zwischen den innerhalb der Gehäusewand 15 befindlichen Übergangskanälen 18 - 21 sind im Gehäuse 11 zusätzliche äußere Verstärkungselemente 94 angeordnet.

An der Außenwand 15 des Gehäuses 11 sind zusätzliche Materialanhäufungen 95 angeordnet, die für die Armatur die Funktion von Fußelementen und/oder Aufhängeelemente besitzen. Sie erleichtern eine Aufstellung der Armatur sowie deren einfachere Handhabung. Bei diesem Ausführungsbeispiel ist der als Abfluss für ein Niederdruck-Brine wirkende Anschluss 46 ein Bestandteil eines separaten Deckelteiles. Dadurch kann in einfachster Weise und durch eine entsprechend verdrehte Anordnung dieses Deckelteiles die Abströmrichtung des Niederdruck-Brine LPD durch den Anschluss 46 einfach an verschiedene örtliche Gegebenheiten angepasst werden.

### Verwendete Bezugszeichen

- 1: Hochdruckpumpe
- 2: Reverse-Osmose-Modul
- 3: Rohrkammern
- 4: Trennkolben
- 5: Rückschlagarmatur
- 6: Boosterpumpe
- 7: Armatur
- 8:
- 9:
- 10, 10.1: Steuerelemente
- 11: Gehäuse
- 12: Zulauföffnung
- 13: Stirnwand
- 14: Raum, Hochdruckraum
- 15: Außenwand
- 16: Anschluss für Rohrkammer
- 17: Anschluss für Rohrkammer
- 18-21: Strömungskanäle
- 22-25: Trennwände
- 26-27: Ringräume
- 28: Gehäuseinnenwand
- 29-36.1: Strömungsöffnungen
- 37-44: Steueröffnungen
- 45: Raum, Niederdruckraum
- 46: Anschluss
- 47: Trennwand
- 48: Streben
- 49: Dichtung
- 50-50.2: Antriebswelle
- 51: Kraftübertragungsmittel
- 52: Gehäusedurchtritt
- 53: Fläche, Lagerflächen
- 54: Axiallager
- 55: Steuerzylinder
- 56-63: Strömungsöffnungen
- 64: Hohlwelle
- 65: Flansch
- 66: Trennwand
- 67: Ringraum
- 68-69: Strömungsöffnungen
- 70-71: Öffnungen
- 72-75: Strömungskanäle
- 76: Ringkanal
- 77: Dichtungszone
- 78: Druckentlastungskanal
- 79-81: Öffnungsebenen
- 82: Steuertasche
- 83: Versteifungsrippe
- 84: Ringelement, Versteifung
- 85: Deckelteil
- 86: Strömungsumlenkung
- 87: Führungsrippen
- 88: Strömungskanäle
- 89: Versteifungsrippe
- 90: Lagerung
- 91: Abdichtung
- 92: Zugangsöffnungen
- 93: Verschlusselemente
- 94: Verstärkungselemente
- 95: Materialanhäufungen
- 96: Stegelement

- LPB: Niederdruck-Brine
- HPB: Hochdruck-Brine

## Patentansprüche

1. Armatur zur Umschaltung von Fluidwegen, insbesondere für Anlagen mit Drucktauschern mit wechselweise durchströmten Rohrkammern (3), wobei innerhalb eines Gehäuses (11) ein drehbares Steuerelement (10, 10.1) mit mehreren Strömungswegen angeordnet ist, das Gehäuse (11) mehrere Anschlüsse (12, 16, 17, 46) für Verbindungsleitungen aufweist, wobei das Gehäuse (11) mit einem ersten Rohrleitungssystem und über die Anschlüsse (16, 17) mit jeweils einer Endseite von mindestens einem Drucktauscher verbunden ist, wobei eine jeweils andere Endseite eines Drucktauschers unter Zwischenschaltung weiterer Armaturen mit einem zweiten Rohrleitungssystem verbunden ist, das Steuerelement (10, 10.1) mit einer motorbetriebenen Antriebswelle (50) versehen ist und die Strömungswege des Steuerelementes (10, 10.1) wechselweise mit am Gehäuse (11) angeordneten Anschlüssen verbunden sind und dass mit den Schaltstellungen des Steuerelementes (10, 10.1) ein einströmendes Hochdruck-Fluid wechselweise zu den Drucktauschern strömt und aus den Drucktauschern abströmendes Niederdruck-Fluid zum Anschluss für abströmendes Niederdruck-Fluid gelangt,ein Anschluss (12) für ein einströmendes Hochdruck-Fluid (HPB), ein Anschluss (46) für ein Niederdruck-Fluid (LPB) und Anschlüsse (16, 17) für mindestens zwei wechselweise mit Hochdruck-Fluid und Niederdruck-Fluid belastete Drucktauscher angeordnet sind, **dadurch gekennzeichnet, dass** innerhalb des Gehäuses (11) zum Steuerelement (10, 10.1) eine Zuströmung aus axialer und/oder radialer Richtung erfolgt und vom Steuerelement (10, 10.1) eine Abströmung des Niederdruck-Fluid in axialer Richtung zum Anschluss für das Niederdruck-Fluid erfolgt und dass am Steuerelement (10, 10.1) im Bereich eines Hochdruckraumes (14) angeordnete Steueröffnungen (37-40) einen anderen Öffnungswinkel aufweisen, als damit korrespondierende Strömungsöffnungen (30, 31, 34, 35) des Gehäuses (11), um während des Umschaltens des Steuerelementes (10, 10.1) die mit der Armatur in Wirkverbindung stehenden Rohrkammern gleichzeitig mit einem hohen Druck der Zulauföffnung zu belasten.

2. Armatur nach Anspruch 1, **dadurch gekennzeichnet, dass** das Steuerelement als ein hohlzylinderförmiges Steuerelement (10) ausgebildet ist und dass eine Trennwand (47) das hohlzylinderförmige Steuerelement (10) in zwei Räume (14, 45) unterschiedlicher Druckbereiche (HPB, LPB) unterteilt.

3. Armatur nach Anspruch 2, **dadurch gekennzeichnet, dass** in den Räumen (14, 45) unterschiedlicher Druckbereiche (HPB, LPB) zusätzliche Versteifungen angeordnet sind.

4. Armatur nach Anspruch 2 oder 3, **dadurch gekennzeichnet, dass** die Versteifungen als radial verlaufene Rippen (83, 89) und/oder als Ringelemente (84) ausgebildet sind.

5. Armatur nach den Ansprüchen 1, 2, 3 oder 4, **dadurch gekennzeichnet, dass** die Antriebswelle (50) drehmomentübertragend mit der Trennwand (47) verbunden ist.

6. Armatur nach Anspruch 5, **dadurch gekennzeichnet, dass** die Trennwand (47) im mittleren Bereich des hohlzylinderförmigen Steuerelementes (10) angeordnet ist.

7. Armatur nach einem der Ansprüche 1 bis 6, **dadurch gekennzeichnet, dass** ein drehmomentübertragendes Bauteil (51) an einer Stirnseite des hohlzylinderförmigen Steuerelementes (10) angeordnet ist.

8. Armatur nach einem der Ansprüche 1 bis 7, **dadurch gekennzeichnet, dass** die Trennwand (47) mit dem Steuerelement (10) fest verbunden ist.

9. Armatur nach einem der Ansprüche 1 bis 7, **dadurch gekennzeichnet, dass** die Trennwand (47) fest mit dem Gehäuse (11) verbunden ist.

10. Armatur nach Anspruch 9, **dadurch gekennzeichnet, dass** die Trennwand (47) am Gehäuse (11) mit Streben (48) im Bereich einer hochdruckseitigen Zulauföffnung (12) befestigt ist.

11. Armatur nach einem der Ansprüche 1 bis 10, **dadurch gekennzeichnet, dass** Dichtungselemente (49) zwischen der Trennwand (47) und der Innenwandfläche des hohlzylinderförmigen Steuerelementes (10) in einer Dichtungszone angeordnet sind.

12. Armatur nach einem der Ansprüche 7 bis 11, **dadurch gekennzeichnet, dass** die Trennwand (47) und/oder die Streben (48) Bestandteil eines auswechselbaren Einsatzes sind.

13. Armatur nach Anspruch 1, **dadurch gekennzeichnet, dass** das Steuerelement (10.1) als ein Vollzylinder ausgebildet ist und dass in dessen Umfangsfläche mehrere nutförmig gestaltete Strömungswege (72-74) unterschiedliche Druckbereiche (HPB, LPB) bilden.

14. Armatur nach Anspruch 13, **dadurch gekennzeichnet, dass** auf der Umfangsfläche die Strömungswege (72, 73; 74, 75) gleicher Druckbereiche einander diametral gegenüberliegend angeordnet sind.

15. Armatur nach Anspruch 13 oder 14, **dadurch gekennzeichnet, dass** ein mit einer Strömungsöffnung (29-31, 33-35) verbundener Abschnitt der nutförmigen Strömungswege (72-75) die Steueröffnung des Steuerelementes (10.1) bildet.

16. Armatur nach Anspruch 13, 14 oder 15, **dadurch gekennzeichnet, dass** im Bereich einer radialen hochdruckseitigen Zulauföffnung (69) eine umlaufende Ringnut (76) im Gehäuse (11) und/oder in der Umfangsfläche des Steuerelementes (10.1) angeordnet ist.

17. Armatur nach einem der Ansprüche 13 bis 16, **dadurch gekennzeichnet, dass** am Steuerelement (10.1) eine geschlossene ringförmige Dichtungszone (77) zwischen Enden der nutförmigen Strömungswege (72-75) der unterschiedlichen Druckbereiche (HPB, LPB) angeordnet ist.

18. Armatur nach Anspruch 17, **dadurch gekennzeichnet, dass** im Bereich der Dichtungszone (77) am Steuerelement (10.1) und/oder am Gehäuse (11) Dichtungselemente angeordnet sind.

19. Armatur nach einem der Ansprüche 1 bis 18, **dadurch gekennzeichnet, dass** am Außenumfang des Steuerelementes (10, 10.1) gabelförmig und/oder gestuft ausgebildete und mit Steueröffnungen (37, 40) verbundene Steuertaschen (82) angeordnet sind.

20. Armatur nach Anspruch 19, **dadurch gekennzeichnet, dass** Stegelemente (96) der gabelförmigen Steuertaschen (82) in der Ebene der radialen Rippe (83) angeordnet sind.

21. Armatur nach einem der Ansprüche 1 bis 19, **dadurch gekennzeichnet, dass** am Innenumfang der Gehäuseinnenwand (28, 55) gabelförmig und/oder gestuft ausgebildete und mit Strömungsöffnungen (30, 31, 34, 35) verbundene Strömungstaschen angeordnet sind.

22. Armatur nach einem der Ansprüche 1 bis 21, **dadurch gekennzeichnet, dass** an und/oder in der Außenwand (15) des Gehäuses (11) mehrere, die Strömungsöffnungen (29-31, 33-36) verbindende Überströmkanäle (18-21) angeordnet sind.

23. Armatur nach einem der Ansprüche 19 bis 22, **dadurch gekennzeichnet, dass** die Strömungsöffnungen (29-31, 33-36) Bestandteil einer einstellbaren, hohlzylindrischen Gehäuseinnenwand (55) sind.

24. Armatur nach einem der Ansprüche 1 bis 23, **dadurch gekennzeichnet, dass** in der Außenwand (15) des Gehäuses (11) mehrere Zugangsöffnungen (92) angeordnet sind.

25. Armatur nach einem oder mehreren der Ansprüche 1 bis 24, **dadurch gekennzeichnet, dass** in der Außenwand (15) des Gehäuses (11) mehrere äußere Versteifungselemente (94) angeordnet sind.

26. Armatur nach einem der Ansprüche 1 bis 25, **dadurch gekennzeichnet, dass** die Rohrkammern (3.1, 3.2) des Drucktauschers während einer Bewegung des Steuerelementes (10, 10.1) kurzzeitig durch die Überströmkanäle (18-21) untereinander verbunden sind.

27. Armatur nach einem der Ansprüche 1 bis 26, **dadurch gekennzeichnet, dass** die Überströmkanäle (18-21) als äußere Rohrelemente ausgebildet sind.

28. Armatur nach Anspruch 27, **dadurch gekennzeichnet, dass** Anschlüsse für die Rohrelemente über den Außenumfang des Gehäuses (11) verteilt angeordnet sind.

29. Armatur nach einem der Ansprüche 1 bis 28, **dadurch gekennzeichnet, dass** die Überströmkanäle (18-21) als in die Gehäusewand integrierte Strömungskanäle ausgebildet sind.

30. Armatur nach einem der Ansprüche 1 bis 29, **dadurch gekennzeichnet, dass** über jeweils mindestens zwei einander diametral gegenüberliegenden Strömungsöffnungen (29, 32; 30, 31, 33, 36; 34, 35) und damit korrespondierenden Steueröffnungen (37-44) ein Flüssigkeitsaustausch zwischen Steuerelement (10, 10.1) und den Überströmkanälen (18-21) erfolgt.

31. Armatur nach einem der Ansprüche 1 bis 30, **dadurch gekennzeichnet, dass** Lage und Größe der Steueröffnungen (37-44) eine druckstoßfreie Strömungsumschaltung ermöglichen.

32. Armatur nach Anspruch 31, **dadurch gekennzeichnet, dass** die Steueröffnungen (37-44) des hohlzylinderförmigen Steuerelementes als Langlöcher, Polygone oder in anderer Form ausgebildet sind.

33. Armatur nach Anspruch 31 oder 32, **dadurch gekennzeichnet, dass** ein Schließen von Steueröffnungen einer Rohrkammer gleichzeitig verbunden ist mit einem Öffnen von vorher geschlossenen Steueröffnungen einer anderen Rohrkammer und umgekehrt.

34. Armatur nach einem der Ansprüche 1 bis 33, **dadurch gekennzeichnet, dass** auf der äußeren Wandfläche des Steuerelementes (10, 10.1) und/oder einer gegenüberliegenden Gehäusefläche oder in einer Gehäuseinnenwand (28, 55) mehrere Druckentlastungskanäle angeordnet sind.

35. Armatur nach einem der Ansprüche 1 bis 34, **dadurch gekennzeichnet, dass** ein oder mehrere Druckentlastungskanäle (78) im Steuerelement (10, 10.1) angeordnet sind.

36. Armatur nach Anspruch 35 oder 35, **dadurch gekennzeichnet, dass** in den Drukkentlastungskanälen eine kontinuierliche oder alternierende Durchströmung erfolgt.

37. Armatur nach einem der Ansprüche 1 bis 36, **dadurch gekennzeichnet, dass** das Steuerelement (10, 10.1) auf einer mäanderförmig verlaufenden, von den Stirnseiten der Trennwände (22 - 25) gebildeten Fläche (53) des Gehäuses (11) gelagert ist.

38. Armatur nach einem der Ansprüche 1 bis 37, **dadurch gekennzeichnet, dass** das Steuerelement (10, 10.1) auf mehreren, von den Stirnseiten der Trennwände (22 - 25) gebildeten Flächen (53) des Gehäuses (11) gelagert ist.

39. Armatur nach einem der Ansprüche 1 bis 38, **dadurch gekennzeichnet, dass** eine als separates Bauteil ausgebildete Gehäuseinnenwand (28) auf einer mäanderförmig verlaufenden, von den Stirnseiten der Trennwände (22 - 25) gebildeten Fläche (53) des Gehäuses (11) gelagert ist.

40. Armatur nach einem der Ansprüche 1 bis 39, **dadurch gekennzeichnet, dass** das Steuerelement (10, 10.1) mit mindestens einem Wellenzapfen in einer Lagerung (90) angeordnet ist.

41. Armatur nach einem der Ansprüche 1 bis 40, **dadurch gekennzeichnet, dass** das Steuerelement (10, 10.1) radial- und axialkraftfrei angeordnet ist.

42. Armatur nach einem der Ansprüche 1 bis 41, **dadurch gekennzeichnet, dass** ein hohlzylinderförmiges Steuerelement (10, 10.1) mit fester Trennwand (47) an einem Axiallager (54) anliegt.

43. Armatur nach einem der Ansprüche 1 bis 42, **dadurch gekennzeichnet, dass** am Steuerelement (10, 10.1) die Hochdruckseite (HPB) zwischen zwei festen Trennwänden (47, 66) ausgebildet ist.

44. Armatur nach den Ansprüchen 41, 42 oder 43, **dadurch gekennzeichnet, dass** ein im Gehäuse angeordneter Ringraum (67) mit der Hochdruckseite (HPB) verbunden ist.

45. Armatur nach einem der Ansprüche 1 bis 44, **dadurch gekennzeichnet, dass** das Gehäuse (11) mit je einem Anschluss (16, 17) zur Verbindung mit einer Rohrkammer (3) und mit je einem Anschluss für eine hochdruckseitige Zulauföffnung (12) und eine niederdruckseitige Ablauföffnung (46) versehen ist.

46. Armatur nach Anspruch 45, **dadurch gekennzeichnet, dass** der Zulauföffnung (12) eine Stützelemente (87) aufweisende Strömungsumlenkung (86) nachgeordnet ist und die Strömungsumlenkung (86) eine Lagerung (90) für das Steuerelement (10, 10.1) umgibt.

47. Armatur nach Anspruch 45 oder 46, **dadurch gekennzeichnet, dass** in einem mit dem Gehäuse (11) verbundene Deckelteil (85) die Zulauföffnung (12) mit der Strömungsumlenkung (86) und der Lagerung (90) angeordnet sind.

48. Armatur nach einem der Ansprüche 45 bis 47, **dadurch gekennzeichnet, dass** das Gehäuse mit einer axial und/oder radial angeordneten niederdruckseitigen Ablauföffnung (46) versehen ist.

49. Armatur nach einem der Ansprüche 1 bis 12 und 19 bis 48, **dadurch gekennzeichnet, dass** die Steueröffnungen (37-44) des hohlzylinderförmigen Steuerelementes beispielsweise als Langlöcher, Polygone oder in anderer Form ausgebildet sind.

## Claims

1. Valve unit for switching over fluid paths, in particular for installations with pressure exchangers with tubular chambers (3) through which flow occurs alternately, a rotatable control element (10, 10.1) with a plurality of flow paths being arranged within a housing (11), the housing (11) having a plurality of connections (12, 16, 17, 46) for connection lines, the housing (11) being connected to a first pipework system and, via the connections (16, 17) to one end, in each case, of at least one pressure exchanger, another end of a pressure exchanger being connected, in each case, to a second pipework system with intermediate connection of further valve units, the control element (10, 10.1) being provided with a motor-driven drive shaft (50) and the flow paths of the control element (10, 10.1) being alternately connected to connections arranged on the housing (11) and, by means of the switching positions of the control element (10, 10.1), an entering high-pressure fluid flows alternatively to the pressure exchangers and low-pressure fluid flowing out of the pressure exchangers reaches the connection for outlet low-pressure fluid, **characterized in that** arrangements are made for a connection (12) for an entering high-pressure fluid (HPB), a connection (46) for a low-pressure fluid (LPB) and connections (16, 17) for at least two pressure exchangers, which are alternatively loaded with high-pressure fluid and low-pressure fluid, **in that** a supply flow takes place from axial and/or radial direction to the control element (10, 10.1) within the housing (11) and an outlet flow of the low-pressure fluid takes place in the axial direction from the control element (10, 10.1) to the connection for the low-pressure fluid and **in that**, on the control element (10, 10.1), control openings (37-40) arranged in the region of a high-pressure space (14) have an opening angle which is different from corresponding flow openings (30, 31, 34, 35) of the housing (11), so that the tubular chambers in effective connection with the valve unit are loaded with a high pressure of the supply opening during the switch-over of the control element (10, 10.1).

2. Valve unit according to Claim 1, **characterized in that** the control element is configured as a hollow cylindrical control element (10) and **in that** a separating wall (47) divides the hollow cylindrical control element into two spaces (14, 45) of different pressure regions (HPB, LPB).

3. Valve unit according to Claim 2, **characterized in that** additional stiffening features are arranged in the spaces (14, 45) of different pressure regions (HPB, LPB).

4. Valve unit according to Claim 2 or 3, **characterized in that** the stiffening features are configured as radially extending ribs (83, 89) and/or as annular elements (84).

5. Valve unit according to Claims 1, 2, 3 or 4, **characterized in that** the drive shaft (50) is connected to the separating wall (47) so that it transmits torque.

6. Valve unit according to Claim 5, **characterized in that** the separating wall (47) is arranged in the central region of the hollow cylindrical control element (10).

7. Valve unit according to one of Claims 1 to 6, **characterized in that** a component (51), which transmits torque, is arranged at one end of the hollow cylindrical control element (10).

8. Valve unit according to one of Claims 1 to 7, **characterized in that** the separating wall (47) is solidly connected to the control element (10).

9. Valve unit according to one of Claims 1 to 7, **characterized in that** the separating wall (47) is solidly connected to the housing (11).

10. Valve unit according to Claim 9, **characterized in that** the separating wall (47) is fastened to the housing (11) with struts (48) in the region of a high-pressure end supply opening (12).

11. Valve unit according to one of Claims 1 to 10, **characterized in that** sealing elements (49) are arranged in a sealing zone between the separating wall (47) and the inner wall surface of the hollow cylindrical control element (10).

12. Valve unit according to one of Claims 7 to 11, **characterized in that** the separating wall (47) and/or the struts (48) are a constituent part of an exchangeable insert.

13. Valve unit according to Claim 1, **characterized in that** the control element (10.1) is configured as a full cylinder and **in that**, in its peripheral surface, a plurality of groove-shaped flow paths (72-74) form different pressure regions (HPB, LPB).

14. Valve unit according to Claim 13, **characterized in that** the flow paths (72, 73; 74, 75) of equal pressure regions are arranged diametrically opposite to one another on the peripheral surface.

15. Valve unit according to Claim 13 or 14, **characterized in that** a section of the groove-shaped flow paths (72-75) connected to a flow opening (29-31, 33-35) forms the control opening of the control element (10.1).

16. Valve unit according to Claim 13, 14 or 15, **characterized in that** a peripheral annular groove (76) in the housing (11) and/or in the peripheral surface of the control element (10.1) is arranged in the region of a radial high-pressure end supply opening (69).

17. Valve unit according to one of Claims 13 to 16, **characterized in that** a closed annular sealing zone (77) is arranged on the control element (10.1) between ends of the groove-shaped flow paths (72-75) of the different pressure regions (HPB, LPB).

18. Valve unit according to Claim 17, **characterized in that** sealing elements are arranged in the region of the sealing zone (77) on the control element (10.1) and/or on the housing (11).

19. Valve unit according to one of Claims 1 to 18, **characterized in that** fork-shaped and/or stepped configurations of control pockets (82), which are connected to control openings (37, 40), are arranged on the outer periphery of the control element (10, 10.1).

20. Valve unit according to Claim 19, **characterized in that** protrusion elements (96) of the fork-shaped control pockets (82) are arranged in the plane of the radial rib (83).

21. Valve unit according to one of Claims 1 to 19, **characterized in that** fork-shaped and/or stepped configurations of control pockets, which are connected to flow openings (30, 31, 34, 35), are arranged on the inner periphery of the housing inner wall (28, 55).

22. Valve unit according to one of Claims 1 to 21, **characterized in that** a plurality of flow-transfer ducts (18-21), which connect the flow openings (29-31, 33-36), are arranged on and/or in the outer wall (15) of the housing (11).

23. Valve unit according to one of Claims 19 to 22, **characterized in that** the flow openings (29-31, 33-36) are a constituent part of an adjustable, hollow cylindrical housing inner wall (55).

24. Valve unit according to one of Claims 1 to 23, **characterized in that** a plurality of access openings (92) are arranged in the outer wall (15) of the housing (11).

25. Valve unit according to one or more of Claims 1 to 24, **characterized in that** a plurality of outer stiffening elements (94) are arranged in the outer wall (15) of the housing (11).

26. Valve unit according to one of Claims 1 to 25, **characterized in that** the tubular chambers (3.1, 3.2) of the pressure exchanger are briefly connected to one another by the flow-transfer ducts (18-21) during a motion of the control element (10, 10.1).

27. Valve unit according to one of Claims 1 to 26, **characterized in that** the flow-transfer ducts (18-21) are configured as external tubular elements.

28. Valve unit according to Claim 27, **characterized in that** connections for the tubular elements are arranged so that they are distributed over the outer periphery of the housing (11).

29. Valve unit according to one of Claims 1 to 28, **characterized in that** the flow-transfer ducts (18-21) are configured as flow ducts which are integrated into the housing wall.

30. Valve unit according to one of Claims 1 to 29, **characterized in that** a fluid exchange between control element (10, 10.1) and the flow-transfer ducts (18-21) takes place via, in each case, at least two mutually diametrically opposed flow openings (29, 32; 30, 31; 33, 36; 34, 35) and control openings (37-44) corresponding to them.

31. Valve unit according to one of Claims 1 to 30, **characterized in that** position and size of the control openings (37-44) permit a flow switch-over free from pressure surge.

32. Valve unit according to Claim 31, **characterized in that** the control openings (37-44) of the hollow cylindrical control element are configured as elongated holes, polygons or in other shape.

33. Valve unit according to Claim 31 or 32, **characterized in that** a closing of control openings of a tubular chamber is simultaneously associated with an opening of previously closed control openings of another tubular chamber and vice versa.

34. Valve unit according to one of Claims 1 to 33, **characterized in that** a plurality of pressure-relief ducts are arranged on the outer wall surface of the control element (10, 10.1) and/or an opposite housing surface or in a housing inner wall (28, 55).

35. Valve unit according to one of Claims 1 to 34, **characterized in that** one or a plurality of pressure-relief ducts (78) are arranged in the control element (10, 10.1).

36. Valve unit according to Claim 34 or 35, **characterized in that** a continuous or alternating through-flow takes place in the pressure-relief ducts.

37. Valve unit according to one of Claims 1 to 36, **characterized in that** the control element (10, 10.1) is supported on a surface (53) of the housing (11), which surface (53) extends in meander shape and is formed by the end surfaces of the separating walls (22 - 25).

38. Valve unit according to one of Claims 1 to 37, **characterized in that** the control element (10, 10.1) is supported on a plurality of surfaces (53) of the housing (11), which surfaces (53) are formed by the end surfaces of the separating walls (22 -25).

39. Valve unit according to one of Claims 1 to 38, **characterized in that** a housing inner wall (28), which is configured as a separate component and is supported on a surface (53) of the housing (11), which surface (53) extends in meander shape and is formed by the end surfaces of the separating walls (22 - 25).

40. Valve unit according to one of Claims 1 to 39, **characterized in that** the control element (10, 10.1) is arranged with at least one shaft extension in a bearing arrangement (90).

41. Valve unit according to one of Claims 1 to 40, **characterized in that** the control element (10, 10.1) is arranged in such a way that it is free from radial and axial forces.

42. Valve unit according to one of Claims 1 to 41, **characterized in that** a hollow cylindrical control element (10, 10.1) with a fixed separating wall (47) is in contact with a thrust bearing (54).

43. Valve unit according to one of Claims 1 to 42, **characterized in that** on the control element (10, 10.1), the high-pressure end (HPB) is configured between two fixed separating walls (47, 66).

44. Valve unit according to one of Claims 41, 42 or 43, **characterized in that** an annular space (67) arranged in the housing is connected to the high-pressure end (HPB).

45. Valve unit according to one of Claims 1 to 44, **characterized in that** the housing (11) is provided with one connection (16, 17) each for connection to a tubular chamber (3) and with one connection each for a high-pressure end supply opening (12) and a low-pressure end outlet opening (46).

46. Valve unit according to Claim 45, **characterized in that** the supply opening (12) is arranged downstream of a flow deflection (86), which has support elements (87), and the flow deflection (86) surrounds a bearing arrangement (90) for the control element (10, 10.1).

47. Valve unit according to Claim 45 or 46, **characterized in that** the supply opening (12) with the flow deflection (86) and the bearing arrangement (90) are arranged in a cap part (85) connected to the housing (11).

48. Valve unit according to one of Claims 45 to 47, **characterized in that** the housing is provided with an axially and/or radially arranged low-pressure end outlet opening (46).

49. Valve unit according to one of Claims 1 to 12 and 19 to 48, **characterized in that** control openings (37-44) of the hollow cylindrical control element are, for example, configured as elongated holes, polygons or in other shape.

## Revendications

1. Ferrure pour la commutation de voies fluidiques, notamment pour des installations avec des échangeurs de pression avec des chambres tubulaires parcourues en alternance (3), un élément de commande rotatif (10, 10.1) avec plusieurs voies d'écoulement étant disposé à l'intérieur d'un boîtier (11), le boîtier (11) présentant plusieurs raccords (12, 16, 17, 46) pour des conduites de raccordement, le boîtier (11) étant connecté à un premier système de conduite tubulaire et par le biais des raccords (16, 17) à un côté d'extrémité respectif d'au moins un échangeur de pression, un autre côté d'extrémité respectif d'un échangeur de pression étant connecté à un deuxième système de conduite tubulaire par interposition d'autres ferrures, l'élément de commande (10, 10.1) étant pourvu d'un arbre d'entraînement (50) entraîné par un moteur et les voies d'écoulement de l'élément de commande (10, 10.1) étant connectées en alternance à des raccords disposés sur le boîtier (11) et un fluide à haute pression affluant s'écoulant en fonction des positions de commutation de l'élément de commande (10, 10.1) en alternance vers les échangeurs de pression et du fluide basse pression sortant des échangeurs de pression parvenant au raccord pour le fluide basse pression de sortie, un raccord (12) pour un fluide haute pression affluant (HPB), un raccord (46) pour un fluide basse pression (LPB) et des raccords (16, 17) pour au moins deux échangeurs de pression sollicités en alternance par du fluide haute pression et du fluide basse pression étant prévus, **caractérisée en ce qu'**à l'intérieur du boîtier (11) vers l'élément de commande (10, 10.1) a lieu un afflux d'orientation axiale et/ou radiale et de l'élément de commande (10, 10.1) a lieu une sortie du fluide basse pression dans la direction axiale vers le raccord pour le fluide basse pression et **en ce que** des ouvertures de commande (37-40) disposées au niveau de l'élément de commande (10, 10.1), dans la région d'un espace haute pression (14), présentent un angle d'ouverture différent de celui des ouvertures d'écoulement correspondantes (30, 31, 34, 35) du boîtier (11), afin de solliciter en même temps avec une haute pression de l'ouverture d'afflux les chambres tubulaires en liaison fonctionnelle avec la ferrure pendant la commutation de l'élément de commande (10, 10.12).

2. Ferrure selon la revendication 1, **caractérisée en ce que** l'élément de commande est réalisé sous forme d'un élément de commande cylindrique creux (10) et **en ce qu'**une paroi de séparation (47) divise l'élément de commande cylindrique creux (10) en deux espaces (14, 45) de différentes plages de pression (HPB, LPB).

3. Ferrure selon la revendication 2, **caractérisée en ce que** l'on prévoit des renforcements supplémentaires dans les espaces (14, 45) de différentes plages de pression (HPB, LPB).

4. Ferrure selon la revendication 2 ou 3, **caractérisée en ce que** les renforcements sont réalisés sous forme de nervures (83, 89) s'étendant radialement et/ou sous forme d'éléments annulaires (84).

5. Ferrure selon les revendications 1, 2, 3 ou 4, **caractérisée en ce que** l'arbre d'entraînement (50) est connecté à la paroi de séparation (47) en transmettant les couples.

6. Ferrure selon la revendication 5, **caractérisée en ce que** la paroi de séparation (47) est disposée dans la partie centrale de l'élément de commande cylindrique creux (10).

7. Ferrure selon l'une quelconque des revendications 1 à 6, **caractérisée en ce qu'**un composant (51) transmettant les couples est disposé sur un côté frontal de l'élément de commande cylindrique creux (10).

8. Ferrure selon l'une quelconque des revendications 1 à 7, **caractérisée en ce que** la paroi de séparation (47) est connectée fixement à l'élément de commande (10).

9. Ferrure selon l'une quelconque des revendications 1 à 7, **caractérisée en ce que** la paroi de séparation (47) est connectée fixement au boîtier (11).

10. Ferrure selon la revendication 9, **caractérisée en ce que** la paroi de séparation (47) est fixée au boîtier (11) avec des entretoises (48) dans la région d'une ouverture d'afflux (12) du côté haute pression.

11. Ferrure selon l'une quelconque des revendications 1 à 10, **caractérisée en ce que** des éléments d'étanchéité (49) sont disposés entre la paroi de séparation (47) et la surface de paroi intérieure de l'élément de commande cylindrique creux (10) dans une zone d'étanchéité.

12. Ferrure selon l'une quelconque des revendications 7 à 11, **caractérisée en ce que** la paroi de séparation (47) et/ou les entretoises (48) font partie d'un insert remplaçable.

13. Ferrure selon la revendication 1, **caractérisée en ce que** l'élément de commande (10.1) est réalisé sous forme de cylindre plein et **en ce que** plusieurs voies d'écoulement (72-74) de configuration en forme de rainure dans sa surface périphérique forment différentes plages de pression (HPB, LPB).

14. Ferrure selon la revendication 13, **caractérisée en ce que** les voies d'écoulement (72, 73 ; 74, 75) de mêmes plages de pression sont disposées de manière diamétralement opposées les unes aux autres sur la surface périphérique.

15. Ferrure selon la revendication 13 ou 14, **caractérisée en ce qu'**une portion des voies d'écoulement (72-75) en forme de rainure, connectée à une ouverture d'écoulement (29-31, 33-35) forme l'ouverture de commande de l'élément de commande (10.1).

16. Ferrure selon la revendication 13, 14 ou 15, **caractérisée en ce que** dans la région d'une ouverture d'afflux radiale (69) côté haute pression, on dispose une rainure annulaire périphérique (76) dans le boîtier (11) et/ou dans la surface périphérique de l'élément de commande (10.1).

17. Ferrure selon l'une quelconque des revendications 13 à 16, **caractérisée en ce que** l'on dispose sur l'élément de commande (10.1) une zone d'étanchéité fermée (77) de forme annulaire, entre des extrémités des voies d'écoulement en forme de rainure (72-75) des différentes plages de pression (HPB, LPB).

18. Ferrure selon la revendication 17, **caractérisée en ce que** dans la région de la zone d'étanchéité (77), on dispose sur l'élément de commande (10.1) et/ou sur le boîtier (11) des éléments d'étanchéité.

19. Ferrure selon l'une quelconque des revendications 1 à 18, **caractérisée en ce que** l'on dispose sur la périphérie extérieure de l'élément de commande (10, 10.1), des cavités de commande (82) en forme de fourche et/ou étagées et connectées à des ouvertures de commande (37, 40).

20. Ferrure selon la revendication 19, **caractérisée en ce que** des éléments de nervure (96) des cavités de commande en forme de fourche (82) sont disposés dans le plan des nervures radiales (83).

21. Ferrure selon l'une quelconque des revendications 1 à 19, **caractérisée en ce que** sur la périphérie intérieure de la paroi intérieure du boîtier (28, 55) sont disposées des cavités d'écoulement en forme de fourche et/ou étagées et connectées à des ouvertures d'écoulement (30, 31, 34, 35).

22. Ferrure selon l'une quelconque des revendications 1 à 21, **caractérisée en ce que** l'on dispose sur et/ou dans la paroi extérieure (15) du boîtier (11) plusieurs canaux de débordement (18-21) reliant les ouvertures d'écoulement (29-31, 33-36).

23. Ferrure selon l'une quelconque des revendications 19 à 22, **caractérisée en ce que** les ouvertures d'écoulement (29-31, 33-36) font partie d'une paroi intérieure ajustable, cylindrique creuse (55) du boîtier.

24. Ferrure selon l'une quelconque des revendications 1 à 23, **caractérisée en ce que** l'on dispose dans la paroi extérieure (15) du boîtier (11) plusieurs ouvertures d'accès (92).

25. Ferrure selon l'une ou plusieurs des revendications 1 à 24, **caractérisée en ce que** l'on dispose dans la paroi extérieure (15) du boîtier (11) plusieurs éléments de renforcement extérieurs (94).

26. Ferrure selon l'une quelconque des revendications 1 à 25, **caractérisée en ce que** les chambres tubulaires (3.1, 3.2) de l'échangeur de pression sont brièvement connectées les unes aux autres par les canaux de débordement (18-21) pendant un mouvement de l'élément de commande (10, 10.1).

27. Ferrure selon l'une quelconque des revendications 1 à 26, **caractérisée en ce que** les canaux de débordement (18-21) sont réalisés sous forme d'éléments tubulaires extérieurs.

28. Ferrure selon la revendication 27, **caractérisée en ce que** des raccords pour les éléments tubulaires sont répartis sur la périphérie extérieure du boîtier (11).

29. Ferrure selon l'une quelconque des revendications 1 à 28, **caractérisée en ce que** les canaux de débordement (18-21) sont réalisés sous forme de canaux d'écoulement intégrés dans la paroi du boîtier.

30. Ferrure selon l'une quelconque des revendications 1 à 29, **caractérisée en ce qu'**un échange de liquide a lieu entre l'élément de commande (10, 10.1) et les canaux de débordement (18-21) au moins par le biais de deux ouvertures d'écoulement diamétralement opposées (29, 32 ; 30, 31, 33, 36 ; 34, 35) et d'ouvertures de commande correspondantes (37-44).

31. Ferrure selon l'une quelconque des revendications 1 à 30, **caractérisée en ce que** la position et la taille des ouvertures de commande (37-44) permettent une commutation d'écoulement sans choc de pression.

32. Ferrure selon la revendication 31, **caractérisée en ce que** les ouvertures de commande (37-44) de l'élément de commande cylindrique creux sont réalisées sous forme de trous oblongs, de polygones ou sous une autre forme.

33. Ferrure selon la revendication 31 ou 32, **caractérisée en ce qu'**une fermeture des ouvertures de commande d'une chambre tubulaire est associée en même temps à une ouverture d'ouvertures de commande préalablement fermées d'une autre chambre tubulaire et inversement.

34. Ferrure selon l'une quelconque des revendications 1 à 33, **caractérisée en ce que** l'on dispose sur la surface de paroi extérieure de l'élément de commande (10, 10.1) et/ou sur une surface de boîtier opposée ou dans une paroi intérieure du boîtier (28, 55) plusieurs canaux de décharge de pression.

35. Ferrure selon l'une quelconque des revendications 1 à 34, **caractérisée en ce qu'**un ou plusieurs canaux de décharge de pression (78) sont disposés dans l'élément de commande (10, 10.1).

36. Ferrure selon la revendication 34 ou 35, **caractérisée en ce qu'**un écoulement continu ou alterné a lieu dans les canaux de décharge de pression.

37. Ferrure selon l'une quelconque des revendications 1 à 36, **caractérisée en ce que** l'élément de commande (10, 10.1) est monté sur une surface (53) du boîtier (11) s'étendant en méandres, formée par les côtés frontaux des parois de séparation (22 - 25).

38. Ferrure selon l'une quelconque des revendications 1 à 37, **caractérisée en ce que** l'élément de commande (10, 10.1) est monté sur plusieurs surfaces (53) du boîtier (11) formées par les côtés frontaux des parois de séparation (22 - 25).

39. Ferrure selon l'une quelconque des revendications 1 à 38, **caractérisée en ce qu'**une paroi intérieure du boîtier (28) réalisée sous forme de composant séparé est montée sur une surface (53) du boîtier (11) s'étendant en méandres, formée par les côtés frontaux des parois de séparation (22 - 25).

40. Ferrure selon l'une quelconque des revendications 1 à 39, **caractérisée en ce que** l'élément de commande (10, 10.1) est disposé avec au moins un tourillon d'arbre dans un support de palier (90).

41. Ferrure selon l'une quelconque des revendications 1 à 40, **caractérisée en ce que** l'élément de commande (10, 10.1) est disposé sans forces radiales ni axiales.

42. Ferrure selon l'une quelconque des revendications 1 à 41, **caractérisée en ce qu'**un élément de commande cylindrique creux (10, 10.1) avec une paroi de séparation fixe (47) s'applique contre un palier axiale (54).

43. Ferrure selon l'une quelconque des revendications 1 à 42, **caractérisée en ce que** le côté haute pression (HPB) sur l'élément de commande (10, 10.1) est réalisé entre deux parois de séparation fixes (47, 66).

44. Ferrure selon l'une quelconque des revendications 41, 42 ou 43, **caractérisée en ce qu'**un espace annulaire (67) disposé dans le boîtier est connecté au côté haute pression (HPB).

45. Ferrure selon l'une quelconque des revendications 1 à 44, **caractérisée en ce que** le boîtier (11) est pourvu d'un raccord respectif (16, 17) pour la connexion à une chambre tubulaire (3) et d'un raccord respectif pour une ouverture d'afflux (12) côté haute pression et une ouverture de sortie (46) côté basse pression.

46. Ferrure selon la revendication 45, **caractérisée en ce que** l'ouverture d'afflux (12) est suivie d'une déviation de l'écoulement (86) présentant des éléments de support (87) et la déviation d'écoulement (86) entoure un support de palier (90) pour l'élément de commande (10, 10.1).

47. Ferrure selon la revendication 45 ou 46, **caractérisée en ce que** l'ouverture d'afflux (12) avec la déviation d'écoulement (86) et le support de palier (90) sont disposés dans une partie de couvercle (85) connectée au boîtier (11).

48. Ferrure selon l'une quelconque des revendications 45 à 47, **caractérisée en ce que** le boîtier est pourvu d'une ouverture de sortie côté basse pression (46) disposée axialement et/ou radialement.

49. Ferrure selon l'une quelconque des revendications 1 à 12 et 19 à 48, **caractérisée en ce que** les ouvertures de commande (37-44) de l'élément de commande cylindrique creux sont réalisées par exemple sous forme de trous oblongs, de polygones ou sous une autre forme.
